# EUROPÄISCHE PATENTSCHRIFT

(11) **EP 3 147 823 B1**
(45) Veröffentlichungstag und Bekanntmachung des Hinweises auf die Patenterteilung: **21.02.2024**
(21) Anmeldenummer: 16189928.1
(22) Anmeldetag: 21.09.2016
(51) Int. Cl.: H04N 23/71, H04N 23/74, H04N 25/531, H04N 25/583, G06V 40/13

(54) **VORRICHTUNG UND VERFAHREN ZUR DIREKTEN OPTISCHEN BILDAUFNAHME VON DOKUMENTEN UND / ODER LEBENDEN HAUTBEREICHEN OHNE ABBILDENDE OPTISCHE ELEMENTE**
DEVICE AND METHOD FOR DIRECT OPTICAL RECORDING OF DOCUMENTS AND/OR LIVING AREAS OF SKIN WITHOUT IMAGING OPTICAL ELEMENTS
DISPOSITIF ET PROCEDE D'ENREGISTREMENT D'IMAGES OPTIQUE DIRECT DE DOCUMENTS ET/OU DE ZONES CUTANEES VIVANTES SANS ELEMENTS OPTIQUES DE REPRESENTATION

(30) Priorität: 22.09.2015 DE 102015116026
(43) Veröffentlichungstag der Anmeldung: 29.03.2017
(73) Patentinhaber: Dermalog Jenetric GmbH, 07749 Jena (DE)
(72) Erfinder: REINHOLD, Jörg, 07743 Jena (DE); WOLFER, Roberto, 07749 Jena (DE); MORGENEIER, Dirk, 07749 Jena (DE)
(74) Vertreter: Gleim Petri Patent- und Rechtsanwaltspartnerschaft mbB

(56) Entgegenhaltungen:
- WO-A1-2014/198259
- US-A1- 2004 252 867
- US-A1- 2005 105 785
- US-A1- 2005 169 506
- US-A1- 2009 232 362
- US-A1- 2012 075 432
- US-A1- 2012 321 149
- US-A1- 2015 102 449
- US-A1- 2015 172 528
- US-B2- 7 769 253
- US-B2- 8 218 068
- KUROKAWA YOSHIYUKI ET AL: "Applications of crystalline Indium-Gallium-Zinc-Oxide technology to LSI: Memory, processor, image sensor, and field programmable gate array", FIFTH ASIA SYMPOSIUM ON QUALITY ELECTRONIC DESIGN (ASQED 2013), IEEE, 26. August 2013 (2013-08-26), Seiten 66-71, XP032513948, DOI: 10.1109/ASQED.2013.6643566 [gefunden am 2013-10-21]
- Anonymous: "Need help on auto-exposure time regarding histogram/threshold.", Machine Vision blog, 26. August 2010 (2010-08-26), XP055361385, Internet Gefunden im Internet: URL:http://forums.ni.com/t5/Machine-Vision /Need-help-on-auto-exposure-time-regarding -histogram-threshold/td-p/1229021 [gefunden am 2017-04-03]
- Robert Ramotowski: "Use of Multiple Images" In: "Lee and Gaensslen's Advances in Fingerprint Technology, Third Edition", 1. Januar 2012 (2012-01-01), CRC Press, XP55359765, ISBN: 978-1-4200-8834-2 Seiten 479-481, * das ganze Dokument *
- Anonymous: "Spectroscopy - Ensuring Document Security - Ocean Optics", , 29. August 2015 (2015-08-29), XP055371325, Gefunden im Internet: URL:https://web.archive.org/web/2015082917 1223/https://oceanoptics.com/secure-import ant-documents/ [gefunden am 2017-05-10]
- Robert Ramotowski: "Use of Multiple Images" In: "Lee and Gaensslen's Advances in Fingerprint Technology, Third Edition", 1 January 2012 (2012-01-01), CRC Press, XP055359765, ISBN: 978-1-4200-8834-2 pages 479-481,

## Beschreibung

Die Erfindung betrifft eine Vorrichtung und ein Verfahren zur optischen Direktaufnahme von sicherheitsrelevanten Objekten ohne optisch abbildende Elemente, enthaltend eine Auflagefläche für die Objekte, unter der eine Sensorschicht, die lichtempfindliche Elemente in einem zweidimensionalen regelmäßigen Pixelraster aufweist, angeordnet ist, insbesondere zur Aufnahme von Dokumenten und Fingerabdrücken lebender Autopodien an Grenzkontrollpunkten oder für andere mobile Einsätze zur Datenaufnahme mit Personenidentifikation. Die Erfindung ist im beigefügten Anspruchssatz beschrieben und betrifft eine Vorrichtung gemäss Anspruch 1, und Verfahren gemäss den Ansprüchen 11 und 17.

Während an Grenzübergängen zunehmend Fingerabdrücke aufgenommen und mit Datenbanken verglichen werden, sind für internationale Reisen zusätzlich Identifikationsdokumente (Personaldokumente) essentiell.

Ein übliches Grenzübergangsszenario ist beispielsweise die digitale Aufnahme eines Dokumentes, überlicherweise eines Reisepasses oder eines Personalausweises. Dieses ID-Dokument wird verifiziert, wobei diverse Sicherheitsmerkmale, teilweise auch mit Beleuchtungs- und Detektionswellenlängen außerhalb des sichtbaren Wellenlängenbereiches im UV und im IR angewendet werden müssen. Des Weiteren werden im Dokument gespeicherte sog. RFID-Daten (engl. radio-frequency identification) ausgelesen und es wird ein Gesichtsbild aufgenommen sowie mindestens ein Fingerabdruck mit hohen Qualitätsanforderungen erfasst.

Die aufgenommenen biometrischen Daten werden mit den RFID-Daten bzw. mit dem Passbild des Personaldokuments verglichen. Sind alle Tests erfolgreich, erhält der Benutzer einen Ausdruck mit dem Ergebnis oder - in einem anderen Szenario - wird ein Tor oder eine Sperrtür geöffnet.

Bei der beschriebenen Prozedur sind wichtige Ziele die Schnelligkeit, Robustheit und Fehlerunanfälligkeit des Systems. Ein System, mit dem sowohl die Hautabdruck- als auch die Dokumentenaufnahme möglich sind, würde die Zuverlässigkeit der Identifikation von Personen anhand des aufgenommenen Hautabdrucks und ihrer vorgelegten Personaldokumente sowie eines Abgleichs beider Ergebnisse mit Daten einer Datenbank deutlich erhöhen. Außerdem könnte ein kombiniertes System den Platzbedarf und daraus abgeleitet den Aktionsradius des Kontrollbediensteten und somit die Abfertigungszeit des Reisenden verringern.

Aber nicht nur an Grenzübergängen ist das Aufnehmen von Hautabdrücken und Dokumenten eine typische Prozedur. In südamerikanischen Banken beispielsweise müssen vor einer Kontoeröffnung die Fingerabdrücke aufgenommen werden. Danach wird der Ausweis (ID-Karte) kopiert und abgelegt. Auch dazu sind derzeit zwei unterschiedliche Geräte erforderlich.

Ähnliche Szenarien gibt es auch bei Autovermietungen, wobei neben dem Fingerabdruck der Ausweis oder anstelle des Ausweises der Führerschein eingescannt wird.

Ebenso werden bei Waffenkäufen in den USA die Abdrücke der Finger für einen Backgroundcheck, also ein polizeiliches Führungszeugnis, neben einer Aufnahme des Führerscheins, der in den USA defacto die ID-Karte ist, benötigt.

In den USA gewinnt der sog. Backgroundcheck, für den die Kombination aus Finger- und Dokumentenaufnahme notwendig ist, zunehmend an Bedeutung. Weiterhin besteht ein wachsender Bedarf beim elektronischen Visum für Einreisende in die EU.

Auch das Prüfen von Zugangsberechtigungen für Personal in sicherheitsrelevanten Bereichen, wie beispielsweise Flughäfen, Atomkraftwerken und Ölraffinerien, durch das Scannen der Fingerabdrücke und das Scannen des Firmenausweises, der diese Fingerabdrücke gespeichert hat, ist ein typisches Anwendungsfeld, in dem insbesondere kombinierte Haut-Dokument-Scanner gefragt sind.

Ein weiteres Szenario ist die mobile Anwendung, wie mobile Grenzkontrollen, beispielsweise in Bussen und Zügen: hier sind das Scannen des Ausweises, Scannen mindestens eines Fingerabdrucks und ein Vergleich desselben mit dem im elektronischen Chip des Ausweises nötig. Viefältige weitere mobile Anwendungsgebiete sind denkbar. Insbesondere die mobile Lösung würde von einer Vereinigung einer leichten und kleinen Technologie zur Haut- und Dokumentenaufnahme profitieren.

Alle Anforderungskriterien benötigen ein ausgewogenes und qualitativ hochwertiges Systemdesign. Bei einem optischen System bedeutet das, dass nicht nur der Aufnahmesensor den Anforderungen genügen muss, sondern auch die Beleuchtung und alle anderen für die Bilderzeugung notwendigen Komponenten.

Bei den Systemen zur Erfassung von Finger- und Handabdrücken ist zu unterscheiden zwischen solchen Systemen, die zur Verifikation, d. h. zu einem Eins-zu-eins-Vergleich mit von einer bestimmten Person, beispielsweise für Zutritts- und Zugriffskontrolle, gespeicherten Fingerabdrücken, verwendet werden, und anderen Systemen, die zur Identifikation verwendet werden, also zum Suchen und Aufnehmen von Vergleichsdaten in einer von staatlichen Behörden verwalteten Datenbank, beispielsweise für Grenzkontrollen, Flugsicherheit und für den Einsatz bei der Polizei.

Für die letztgenannten Systeme gibt es eine Vielzahl von Forderungen bezüglich Qualität, Auflösung und Originaltreue der von den Hauttexturen aufgenommenen Bilder. Außerdem existiert mit dem Anforderungskatalog des FBI ein hoher Grad der Standardisierung, um einerseits zweifelsfreie Erkennung zu sichern und andererseits Datensätze, die mit verschiedenen Systemen aufgenommen wurden, vergleichbar zu machen. Dieser Anforderungskatalog umfasst sechs wichtige Parameter. Zunächst müssen die Systeme entweder mindestens 500 ppi oder mindestens 1000 ppi Auflösung haben. Darunter ist jeweils keine Zertifizierung möglich. Einer der wichtigsten Parameter für die Zertifizierung ist die Kontrasttransferfunktion (Contrast Transfer Function, CTF). Der Anforderungskatalog beschreibt hierbei genau, welchen Wert die CTF bei den entsprechenden Ortsfrequenzen im Bild mindestens haben. Laut FBI-Vorgaben muss für ein 500 ppi-System bei 10 Lp/mm der Kontrast mindestens 25,8 % erreichen, während für ein 1000 ppi-System bei 20 Lp/mm mindestens ein Kontrast von 28% erreicht werden muss. Ein weiterer wichtiger Parameter ist das Signal-Rausch-Verhältnis (Signal Noise Ratio, SNR), das unabhängig von der Auflösung mindestens 42 dB haben soll. Weitere Anforderungen sind eine geringe Verzeichnung < 1 %, das Vorhandensein von mindestens 200 verschiedenen Grauwerten und ein homogen ausgeleuchtetes Bildfeld sowohl in der näheren Pixelumgebung als auch im gesamten Bild. Der letzte Parameter dient der Kontrolle, dass keine Bildverfälschung stattfindet. Das heißt, es wird in den Bildern explizit nach ungewöhnlichen Artefakten gesucht, um Bildmanipulationen zu erkennen.

Für die Erfassung von Finger- und Handabdrücken mit den hohen Qualitätsanforderungen entsprechend dem Forderungskatalog des FBI, wie zum Beispiel für forensische Zwecke oder für die Personenidentifizierung an Grenzübergängen, werden derzeit vorwiegend optische Anordnungen, nach dem Prinzip der gestörten internen Totalreflexion (FTIR - frustrated total internal reflection), verwendet. Dabei kommt ein Prisma zum Einsatz, dessen für die Aufnahme des Abdruckes vorgesehene Fläche aufgrund mechanischer und optischer Anforderungen größer als die geforderte Fläche für die Aufnahme des Abdruckes sein muss. Die daraus resultierende Größe des Prismas als häufig größtes Bauteil im Aufnahmekanal beeinflusst die Mindestbaugröße und Mindestmasse eines Gerätes entscheidend. Die hohe Bildgüte erlaubt demgegenüber jedoch eine schnelle und sichere Erfassung und Identifizierung der Personen, insbesondere für Anwendungen, bei denen neben forensischer Genauigkeit (Anforderungen des FBI) auch ein hoher Personendurchsatz, wie beispielsweise bei Grenzkontrollen, erwartet wird.

Nachteile solcher Anordnungen mit Prismen sind neben der Baugröße und der Masse die notwendigen komplexen mechanischen Bauteile sowie eine aufwändige Montage und Justierung. Eine Aufnahme von Dokumenten ist mit dem Strahlengang, der zur Fingerabdruckaufnahme benutzt wird und auf FTIR beruht, nicht möglich. Daher ist die Integration dieser Funktionalität in ein prismenbasiertes Gerät nur mit zusätzlichem Aufnahmekanal möglich, wie z. B. in EP 2 120 182 B1 beschrieben. Üblicherweise wird für die geschilderten Anwendungsszenarien ein zweites Gerät zum Einlesen der Dokumente hinzugefügt. Dadurch entsteht allerdings das Problem, dass Benutzer oft die Auflageflächen beider Geräte verwechseln, die Rate der Fehlbedienung also hoch ist. Beide Varianten bringen außerdem einen enormen Kosten- und Platzaufwand mit sich.

Miniaturisierte Anordnungen mit abbildender Optik, wie beispielsweise in der US 7 379 570 B2 offenbart, genügen im Allgemeinen nicht den Anforderungen des FBI und begrenzen aufgrund des optischen Strahlengangs immer noch die Minimierung der Fingerabdruckgeräte, und eine Dokumentenaufnahme ist mit diesen Systemen nicht denkbar, da auch hier FTIR eingesetzt wird und ein weiterer Strahlengang zur Bildaufnahme wiederum dem Ansatz der Miniaturisierung widerspricht.

Systeme ohne konventionelle optische Abbildung versprechen eine kleinere und leichtere Bauweise. Ultraschall- oder piezoelektrische Sensoren, wie beispielsweise aus US 4 394 773 A bekannt, sowie kapazitive Sensoren, wie beispielsweise in US 5 325 442 A beschrieben, ermöglichen die Abbildung von Dokumenten, erreichen aber bei Fingerabdrücken nicht die Qualitätsanforderungen des FBI. Folientastaturen, wie z. B. aus US 2005/0229380 A1 bekannt, erreichen nicht die FBI-Vorgaben und ermöglichen auch keine Dokumentenaufnahme.

R. Ramotowski: "Use of Multiple Images" (in: Lee and Gaensslen's Advances in Fingerprint Technology, 3rd Edition, Jan. 2012, CRC Press, ISBN: 978-1-4200-8834-2, S. 479-481) offenbart ein HDR-Mehrbildverfahren mit dem Ziel der Kontrastverbesserung. Hierbei werden mehrere Bilder aufgenommen und zu einem Ergebnisbild mit verbessertem Kontrast verarbeitet. Die aufeinanderfolgende Aufnahme einzelner Bilder mit dem Ziel, jeweils folgende Aufnahmen durch eine Steuerung der Belichtungszeit iterativ zu verbessern, ist für nicht statische Fingerabdruckaufnahmen zeitkritisch aufgrund möglicher Zitterbewegungen.

Ein weiteres optisches Verfahren zur Erzeugung von Bildaufnahmen mit verbessertem Kontrast und/oder verbesserter Dynamik wurde in einem Foreneintrag des Machine Vision Blog, (in: Internet, URL: "http://forums.ni.com/t5/Machine-Vision/Need-help-onauto-exposure-time-regarding-histogram-treshold/t5d-p/1229021 ", 26. August 2010, S. 1) diskutiert. Zur Verbesserung des Kontrasts und der Heligkeitsverteilung von Aufnahmen wird ein Verfahren vorgeschlagen, das zunächst die Aufnahme eines Bildes mit einer Kamera vorsieht, welches anschließend hinsichtlich Über-oder Unterbelichtung ausgewertet wird. Im Anschluss wird die Belichtungszeit der Kamera angepasst und gilt - gegebenenfalls nach weiteren Iterationsschritten - als kalibriert. Damit ist ein Leitfaden zur Kontrastverbesserung für Nutzer von regulären Digitalkameras beschrieben, das für die Erzeugung kontrastreicher unterschiedlicher Hautabdruckbilder in Mehrfingeraufnahmen ungeeignet ist.

Für ein optisches Verfahren, das ohne konventionelle optisch abbildende Elemente auskommt, wurden in der US 2012/0321149 A1 bereits Ansätze beschrieben. Die dort offenbarte Anordnung, bei der der Finger direkt auf eine transparente Platte über dem Substrat mit dem Sensorarray gelegt wird, nimmt einen Fingerabdruck auf. Das dem Fingerabdruck entsprechende Helligkeitsprofil entsteht dabei - wie bei Anordnungen mit Prismen - dadurch, dass die auf der Oberfläche der transparenten Glas- oder Kunststoffplatte aufliegenden Hautberge (auch genannt Hautleisten oder Papillarlinien) die interne Reflexion des Lichtes von der Lichtquelle stören, während in den Hauttälern (auch genannt Papillarkörperreihen) kein Kontakt zwischen Haut und Oberfläche auftritt und dort das Licht der Lichtquelle an der Oberfläche der transparenten Platte intern reflektiert wird. Auf den lichtempfindlichen Bereichen des Sensorarrays entsteht somit ein Negativbild des Fingerabdrucks.

Diese Lösung setzt voraus, dass die obere transparente Platte zur Auflage des Fingers eine Mindestdicke hat, damit das Licht bei Reflexion an der Unterseite der transparenten Platte auf die lichtempfindlichen Elemente des Sensorarrays treffen kann. Weiterhin ist es notwendig, dass die Beleuchtung bestimmte Anforderungen bezüglich Einfallsrichtung und Öffnungswinkel bzw. Kollimation erfüllt, was den technischen Aufwand für die Beleuchtung und auch deren Platzbedarf deutlich erhöht. Die vorgestellten Ausführungen der Beleuchtung sind für große Aufnahmeflächen für mehr als einen oder zwei Finger nicht oder nur mit erheblichem Aufwand realisierbar.

Ein weiteres Konzept für eine flache Bauweise ohne abbildende Optik wird im Patent US 7 366 331 B2 beschrieben. Hierbei wird Licht seitlich mittels einer flächigen Beleuchtung in den Finger und von diesem auch zur aufliegenden Hautpartie gekoppelt. Der Finger befindet sich in Kontakt mit einer transparenten Schicht zwischen Finger und Sensor. Somit koppelt vorzugsweise Licht aus den Hautbergen in diese Schicht und kann somit vom Flächensensor detektiert werden.

Dieses Konzept bedingt Beleuchtungswellenlängen innerhalb des Transparenzbereichs des Fingers (von 600 nm bis hinein in den NIR- und IR-Bereich) und bringt erhebliche Umgebungslichtprobleme mit sich. Die vorgeschlagene Verwendung von Spektralfiltern mit transparentem IR-Fenster und IR-Beleuchtung reduziert diese Probleme, jedoch besteht dann eine geringere Empfindlichkeit üblicher Sensoren und höhere Absorption des Fingers, wodurch sich das Signal-Rausch-Verhältnis verschlechtert. Bei Verwendung schmalbandiger Spektralfilter muss entsprechend die Wellenlänge der Beleuchtung angepasst werden, dies erzeugt zusätzlichen Aufwand. Das Beleuchtungskonzept ist nicht für die Dokumentenaufnahme geeignet. Außerdem verursacht die seitliche Beleuchtung Probleme bei der Homogenität der Ausleuchtung, insbesondere verhindert sie die gleichzeitige Aufnahme mehrerer Finger, da diese sich gegenseitig abschatten würden. Somit ist dieses Konzept nur für die Aufnahme eines Fingers geeignet. Außerdem ist ein Lichtschild notwendig um zu verhindern, dass Anteile der Beleuchtung direkt in den Sensor gelangen. Die seitliche Beleuchtung und der Lichtschild vergrößern das Gerät und es wird aufwändiger, unflexibler und fehleranfälliger.

In WO 2015/005959 A1 wird ein weiteres Konzept zur abbildungslosen Aufnahme von Fingerabdrücken vorgestellt. Dieses verwendet eine spezielle transparente Schicht, die das von Objekten reflektierte Licht auf der dem Objekt zugewandten Seite einkoppelt und auf der gegenüberliegenden Seite wieder auskoppelt. Das ausgekoppelte Licht wiederum wird konventionell geometrisch abgebildet. Prinzipiell scheint die Aufnahme von Dokumenten mit diesem Konzept möglich. Die konventionelle Abbildung übernimmt bei diesem Konzept im Allgemeinen eine Kamera, die einen entsprechenden geometrischen Strahlengang bedingt, der die Mindestbaugröße des Gerätes im Wesentlichen beeinflusst. Die Beleuchtung kann hier per Projektion appliziert werden, hat dann aber weiteren wesentlichen Platzbedarf. Sie kann aber auch als zusätzliche Schicht unterhalb der oben genannten speziellen transparenten Schicht angebracht werden. In diesem Fall wird die Abbildung mit der Kamera durch diese Beleuchtungsschicht hindurch erfolgen, was aufgrund der für die Abbildung notwendigen Transparenz hohe Anforderungen an diese Beleuchtungsschicht stellt. Ein prinzipielles Problem des Konzepts stellt störendes Umgebungslicht dar, dem hier lediglich per Software (Abzug des Bildhintergrundes) entgegengewirkt wird. Ein Schutz vor Überbelichtung ist dadurch nicht gewährleistet.

Der Erfindung liegt die Aufgabe zugrunde, eine neue Möglichkeit zur optischen Direktaufnahme von Haut- und Dokumentenabdrücken mit der vorgegebenen Qualität nach FBI-Standard zu finden, bei der Störungen durch das Umgebungslicht ausgeschlossen und keine passiven Abschattungsmaßnahmen notwendig sind.

Erfindungsgemäß wird die Aufgabe bei einer Vorrichtung zur optischen Direktaufnahme von sicherheitsrelevanten Objekten ohne abbildende optische Elemente, enthaltend eine Auflagefläche für die Objekte, unter der eine Sensorschicht, die lichtempfindliche Elemente in einem zweidimensionalen regelmäßigen Pixelraster aufweist, angeordnet ist, dadurch gelöst, dass die Sensorschicht in einem Schichtkörper mit einer Elektronik auf Basis der Dünnschicht-Transistor-(TFT-)Technologie ausgeführt ist, dass sich die Sensorschicht auf einer mindestens im sichtbaren Wellenlängenbereich transparenten Trägerschicht befindet, dass die lichtempfindlichen Elemente der Sensorschicht einen Abstand zu dem aufzunehmenden Objekt auf der Auflagefläche von weniger als dem durch das Pixelraster definierten Pixelmittenabstand aufweisen, dass eine weitere Elektronik zur Bildspeicherung und Bildanalyse vorhanden ist, die mindestens eine Bewertung von Parametern, die Aussagen über die Qualität der Bildaufnahme liefern und die sich bei Anpassung der Belichtungszeit ändern, aufweist, dass die lichtempfindlichen Elemente der Sensorschicht innerhalb der Elektronik auf Basis der TFT-Technologie über jeweils eine elektronische Steuereinheit zur Steuerung der Belichtungszeit verfügen, um aufeinanderfolgend Bildsignale eines Objektes mit an die Objektabbildung mittels der weiteren Elektronik zur Bildspeicherung und Bildanalyse angepassten unterschiedlichen Belichtungszeiten auszulesen, dass als sicherheitsrelevante Objekte mindestens ein Objekt aus der Gruppe Personaldokumente, Reisepässe, Führerscheine oder aus der Gruppe Finger-, Hand- oder andere Hautabdrücke einzeln auf die Auflagefläche (103) auflegbar sind, um Bilder eines nach Bedarf aus beiden Gruppen ausgewählten Objekts aufzunehmen, und dass eine Lichtquelle als primäre Leuchtschicht so ausgebildet ist, dass mindestens Lichtanteile von der primären Leuchtschicht aus Richtung der Sensorschicht durch die Auflagefläche hindurch das aufzunehmende Objekt beleuchten können, wobei alle Schichten des Schichtkörpers, die sich zwischen primärer Leuchtschicht und Auflagefläche befinden, mindestens Lichtanteile im sichtbaren Wellenlängenbereich transmittieren.

Vorteilhaft ist die Steuereinheit zur Steuerung der Belichtungszeit als Rolling-Shutter ausgebildet. Sie kann aber auch vorzugsweise als Global-Shutter realisiert sein.

Die Steuereinheit zur Steuerung der Belichtungszeit ist zweckmäßig so ausgebildet, dass die Belichtungszeit von verschiedenen Pixeln oder Pixelgruppen (beispielsweise Zeilen oder Spalten) für dieselbe Aufnahme unterschiedlich einstellbar ist.

Als primäre Leuchtschicht kann bevorzugt eine Kaltkathodenröhre oder eine Photolumineszenzfolie unter der Sensorschicht angeordnet sein.

Die primäre Leuchtschicht kann des Weiteren eine Anordnung von zweidimensional regelmäßig angeordneten singulären Leuchtdioden aus der Gruppe LED, OLED, QLED enthalten, die unterhalb oder innerhalb der Sensorschicht angeordnet ist.

Es erweist sich als vorteilhaft, wenn die primäre Leuchtschicht ein erstes Wellenlängenspektrum aufweist und mindestens eine sekundäre Leuchteinheit mit mindestens einem zweiten, mit dem ersten Wellenlängenspektrum nicht identischen Wellenlängenspektrum alternativ zur primären Leuchtschicht einschaltbar ist, um mindestens ein Vergleichsbild für eine Fälschungserkennung bei Finger- oder Handabdruckaufnahmen oder eine Verifizierung von Sicherheitsmerkmalen bei Dokumentenaufnahmen bei jeweils unterschiedlichen Vergleichswellenlängen aufzunehmen.

In einer besonders bevorzugten Ausführung ist die primäre Leuchtschicht durch ein lichtabstrahlendes Display eines mobilen Kommunikationsgerätes aus der Gruppe Smartphone, Tablet-Computer, Laptop ersetzt, auf das die transparente Trägerschicht des Schichtkörpers aufgelegt ist.

Zusätzlich zur primären Leuchtschicht in Form des Displays des mobilen Kommunikationsgerätes ist die sekundäre Leuchteinheit vorteilhaft zwischen primärer Leuchtschicht und Auflagefläche des Schichtkörpers vorhanden und enthält zweckmäßig mindestens eine Lichtquelle aus der Gruppe, LED, OLED, mindestens eine Lichtleitschicht, wobei die sekundäre Leuchteinheit für das Licht des Displays des mobilen Kommunikationsgerätes weitgehend transparent ist.

Des Weiteren wird die Aufgabe durch ein Verfahren zur Erzeugung von optischen Direktaufnahmen ohne optisch abbildende Elemente mit verbessertem Kontrast und / oder verbesserter Dynamik unter Verwendung einer Vorrichtung nach Anspruch 1 mit einer Auflagefläche die Objekte, unter der sich eine Sensorschicht mit in einem zweidimensionalen regelmäßigen Pixelraster angeordneten lichtempfindlichen Elementen befindet, durch folgende Schritte gelöst:
- Auflegen eines aus der Gruppe Personaldokumente, Reisepässe, oder Führerscheine oder aus der Gruppe Einzelfinger, Mehrfinger, Handabdrücke oder andere Hautabdrücke nach Bedarf ausgewählten Objektes auf die Auflagefläche,
- Aufnahme eines Bildes mit einer vordefinierten Belichtungszeit und Speicherung des Bildes,
- Analyse des Bildes mindestens hinsichtlich Über- oder Unterbelichtung,
- Ändern der Belichtungszeit, wenn die Analyse eine Über- oder Unterbelichtung festgestellt hat, durch Änderung der Shuttereinstellung der lichtempfindlichen Elemente in der Sensorschicht,
- erneute Bildaufnahme, Bildspeicherung und Bildanalyse auf Über- oder Unterbelichtung, ob eine weitere Iteration zu Änderung der Belichtungszeit notwendig ist, und
- Speichern der Bildaufnahme als Ergebnisbild, wenn die Bildanalyse keine weitere Änderung der Belichtungszeit erforderlich macht.

Vorteilhaft wird in der Bildanalyse zusätzlich die Beleuchtungsstärke bewertet und beim Feststellen einer Unter- oder Überbelichtung erfolgt eine Anpassung der Beleuchtungsstärke einer primären Leuchtschicht unterhalb einer Auflagefläche.

Es erweist sich als zweckmäßig, das in der Bildanalyse zusätzlich die Homogenität der Bildausleuchtung bewertet und bei Feststellung einer lokalen Über- oder Unterbelichtung mindestens in Teilen der Bildaufnahme des Objekts eine weitere Bildaufnahme in Abhängigkeit von festgestellten Inhomogenitäten bei lokal angepasster Beleuchtungsstärke mittels einer primären Leuchtschicht vorgenommen wird, um die Inhomogenitäten zu reduzieren oder zu kompensieren.

Ferner ist es vorteilhaft, das das Verfahren mehrfach bei Beleuchtung des Objekts mit unterschiedlichen Beleuchtungswellenlängen durchgeführt wird, wobei mehrere Bilder jeweils mit unterschiedlichem Spektralbereich und opimierter Belichtungszeit einzeln gespeichert und in einem weiteren Schritt mittels Bildbearbeitungsalgorithmen die mehreren einzelnen Bilder zu einem mehrfarbigen Gesamtbild überlagert werden.

Das Verfahren lässt sich weiter vorteilhaft ergänzen, indem zusätzliche Bildaufnahmen im UV- und IR-Bereich für die Prüfung von Sicherheitsmerkmalen von Dokumenten aufgenommen und separat abgespeichert werden.

Des Weiteren ist es zweckmäßig, wenn zusätzliche Bildaufnahmen bei Beleuchtung mit schmalbandigen sekundären Leuchteinheiten in unterschiedlichen Spektralbereichen zur Fälschungsprüfung von Finger- oder Handabdrücken aufgenommen, als Vergleichsbilder gespeichert und untereinander oder mit Referenzaufnahmen verglichen werden.

Die Aufgabe wird ferner gelöst durch ein Verfahren zur Erzeugung von optischen Direktaufnahmen von sicherheitsrelevanten Objekten mit verbessertem Kontrast und / oder verbesserter Dynamik unter Verwendung einer Vorrichtung nach Anspruch 1 mit einer Auflagefläche für die Objekte, unter der sich eine Sensorschicht mit in einem zweidimensionalen regelmäßigen Pixelraster angeordneten lichtempfindlichen Elementen befindet, mit den folgenden Schritten:
- Auflegen eines aus der Gruppe Personaldokumente, Reisepässe, oder Führerscheine oder aus der Gruppe Einzelfinger, Mehrfinger, Handabdrücke oder andere Hautabdrücke nach Bedarf ausgewählten Objektes auf die Auflagefläche,
- Aufnahme und Speicherung von mindestens zwei Bildern vom aufgelegten Objekt, die aufeinanderfolgend mit unterschiedlichen, an die Objekte der beiden verschiedenen Gruppen angepassten Belichtungszeiten durch Änderung der Shuttereinstellungen der lichtempfindlichen Elemente in der Sensorschicht erzeugt werden,und
- Überlagerung der mindestens zwei gespeicherten Bilder mittels eines Softwarealgorithmus, sodass ein kontrastverbessertes oder dynamikbereich-verbessertes Ergebnisbild entsteht.

Der grundlegende Erfindungsgedanke fußt auf dem Grundproblem, dass bei der optischen Aufnahme von Fingerabdrücken, insbesondere mittels direkter optischer Verfahren, die ohne optisch abbildende Elemente auskommen, ein zumeist störender Einfluss des Umgebungslichts auftritt und die Aufnahme qualitativ verschlechtert oder verfälscht wird. Ohne externe Schutzvorrichtungen bzw. Schutzschilde gelangt das Umgebungslicht ungehindert durch die Auflagefläche auf den Sensor, was in der Regel zur Überbelichtung mindestens um die aufgelegten Hautbereiche herum führt, aber auch an deren Rändern. Da ein Großteil des Umgebungslichtspektrums die aufgelegten Autopodien passiert, können auch innerhalb des aufgelegten Hautbereiches, je nach Umgebungslichtsituation, Überbelichtungen stattfinden. Eine Möglichkeit, diesem Problem zu begegnen, ist der Einsatz spektraler Filter zwischen Auflagefläche und Sensorarray, um das Beleuchtungsspektrum einzuschränken (US 2004/0252867 A1). Die zusätzliche Aufnahme von Personaldokumenten wäre mit demselben Sensorarray somit nur noch in diesem eingeschränkten Wellenlängenbereich möglich. Ein mit dem visuellen Eindruck vergleichbares Farbbild eines Dokumentes ist bei einem solchen Konzept unmöglich. Auch die Detektion von Sicherheitsmerkmalen, die eine Beleuchtung und / oder Detektion auch im UV- und IR-Wellenlängenbereich verlangen, ist in diesem Fall nicht möglich. Konzept der Erfindung ist es daher, eine Vorrichtung, enthaltend ein Sensorarray, basierend auf TFT-Technologie (vgl. WO 2012/067409 A3, US 6 952 022 B2, US 7 442 588 B2) und zur adaptiven Belichtungszeitregulierung, enthaltend eine Shuttertechnologie, zur Detektion von Autopodien und Dokumenten zu verwenden. Elektronische Shutter sind hauptsächlich aus der CMOS-Technologie bekannt (vgl. US 8 569 671 B2), aber auch bereits für TFT-Technologie bekannt (vgl. US 7 769 253 B2) und entsprechen dem Stand der Technik.

Störende Einflüsse durch Umgebungslicht werden durch eine aktive Belichtungszeitkontrolle im Sensorelement verhindert. Dabei regeln elektronische Shutter die Belichtungszeit für die Sensorelemente, so dass einer Überbelichtung durch das Umgebungslicht entgegengewirkt werden kann. Optische Elemente zur Reduzierung der spektralen Bandbreite, wie sie bei optischen Direkt-Scannern, also ohne konventionelle optische Abbildung arbeitenden Sensorarrays, gegen störendes Umgebungslicht eingesetzt werden, sind somit nicht mehr notwendig, sodass über einen breiten Spektralbereich Licht detektiert werden kann. Dadurch wird neben der Aufnahme von Hautabdrücken auch die vollfarbige Aufnahme von Dokumenten möglich. Zusätzlich wird die Fälschungserkennung von Autopodien und Dokumenten durch die Detektierbarkeit im gesamten sichtbaren Wellenlängenspektrum, sowie im UV- und im IR-Bereich, erheblich erleichtert.

Neben dem Ausschluss von Störungen durch das Umgebungslicht kann dieses ausschließlich oder zusätzlich durch die aktive Belichtungskontrolle gezielt zur Aufnahme von Hautabdrücken lebender Autopodien genutzt werden. Die Nutzung von Umgebungslicht als Beleuchtungsquelle zur Detektion von Fingerabdrücken ist konzeptionell bereits in US 2013/0119237 A1 vorgeschlagen. Allerdings koppelt hier das Umgebungslicht in einen Bereich neben den aufgelegten Fingern ein und wird durch spiegelnde und lichtleitende optische Elemente in die Schicht zwischen der Auflagefläche und einer Sensorschicht geführt. Um mit diesem Konzept einerseits eine hinreichend homogene Ausleuchtung und andererseits eine qualitativ hochwertige Bildgebung durch dieses Lichtleitelement hindurch zu erreichen, bedarf es einer sehr komplizierten und aufwändigen Ausführung des Lichtleitelements. Abstriche bei der Aufnahmequalität des Fingerabdrucks sind nicht vermeidbar. Außerdem gibt es bei dieser Anordnung keinen hinreichenden Schutz vor Überbelichtung des Sensors.

Der erfindungsgemäße Direktsensor weist, verglichen mit herkömmlichen Kamerasensoren, sehr große lichtempfindliche Bereiche auf und nutzt außerdem alle im Umgebungslicht zur Verfügung stehenden Wellenlängenanteile aus, bei denen er sensitiv ist, und es gibt keine Spektralfilter, die das Wellenlängenspektrum einschränken. Beide Eigenschaften bewirken, dass der Sensor schon bei geringer Lichtintensität betrieben werden kann. Damit sind stromsparende, kleine und leichte mobile Systeme möglich. Eine zusätzliche künstliche Beleuchtung könnte in diesem Szenario allein durch die Hintergrundbeleuchtung eines zusätzlichen mobilen Gerätes, wie Smartphone oder Tablet, gegeben sein. Ebenso möglich ist der gänzliche Verzicht auf zusätzliche künstliche Lichtquellen bei der Aufnahme von lebenden Hautabdrücken von Autopodien. Im Gegensatz zur vorgenannten US 2013/0119237 A1 werden hier Lichtanteile genutzt, die durch den Finger hindurch gelangen, sodass zusätzliche Lichtleitelemente nicht nötig sind. Die Sensorschicht kann sich daher hier in geringerem Abstand zur Auflagefläche befinden und somit verspricht die erfindungsgemäße Vorrichtung eine höhere Bildqualität. Außerdem beinhaltet sie durch die aktive und adaptive Regelung der Belichtungszeit eine Gegenmaßnahme zur Vermeidung von Überbelichtung.

Die Erfindung soll nachstehend anhand von Ausführungsbeispielen näher erläutert werden. Die Zeichnungen zeigen:
- Fig. 1a-b: eine Prinzipdarstellung des grundsätzlichen Aufbaus der Vorrichtung (a) in Draufsicht und (b) in einer seitlichen Ansicht, die den Schichtaufbau zeigt,
- Fig. 2: das der Erfindung zugrunde liegende optische Prinzip zur kontrastreichen detaillierten Aufnahme von Hautabdrücken,
- Fig. 3a-b: eine Darstellung der prinzipiellen Lichtwege von Umgebungslicht und Licht einer primären Lichtquelle von (a) einem lebenden Autopodium und (b) einem Dokument als alternativ aufzulegende Aufnahmeobjekte,
- Fig. 4: eine typische CTF als Funktion der Ortsauflösung (LP/mm) für verschiedene Abstände zwischen dem Aufnahmeobjekt und den lichtempfindlichen Elementen,
- Fig. 5: das prinzipielle Verfahren, um mit der erfindungsgemäßen Vorrichtung ein Bild mit optimierter Belichtungszeit aufzunehmen,
- Fig. 6: ein Ausführungsbeispiel der Erfindung zur Realisierung einer elektronischen Belichtungszeiteinstellung,
- Fig. 7a-c: Ausführungsbeispiele mit verschiedenen homogenen Beleuchtungsvorrichtungen,
- Fig. 8a-f: Ausführungsbeispiele mit verschiedenen Beleuchtungsvorrichtungen, die pixelweise oder bereichsweise geschaltet werden können,
- Fig. 9a-c: ein bevorzugtes Ausführungbeispiel mit LCD als Beleuchtung, wobei ein Teilbereich des LCD mit dem erfindungsgemäßen Sensor bedeckt ist,
- Fig. 10: ein bevorzugtes Verfahren, bei dem zur Bildaufnahme neben der Belichtungszeit auch das Beleuchtungsmuster und die Beleuchtungsstärke angepasst werden,
- Fig. 11a-b: ein bevorzugtes Ausführungsbeispiel, bei dem neben der primären Leuchtschicht für Wellenlängen im sichtbaren Spektralbereich eine zusätzliche sekundäre Leuchteinheit für weitere Wellenlängenbereiche angeordnet ist (z. B. für Bereich im UV oder IR),
- Fig. 12: ein bevorzugtes Verfahren, bei dem zusätzlich zur Bildaufnahme mit optimaler Belichtungszeit eine weitere Bildaufnahme zur Fäschungserkennung durchgeführt wird, und
- Fig. 13a-d: ein bevorzugtes Ausführungsbeispiel für die Nutzung eines mobilen Kommunikationsgerätes als Beleuchtung und Kommunikationsgerät - (a) TabletComputer in einer Draufsicht mit aufgelegter erfindungsgemäßer Vorrichtung und (b) in einem Querschnitt sowie (c) Smartphone in einer Draufsicht mit aufgelegter erfindungsgemäßer Vorrichtung und (d) in einem Querschnitt.

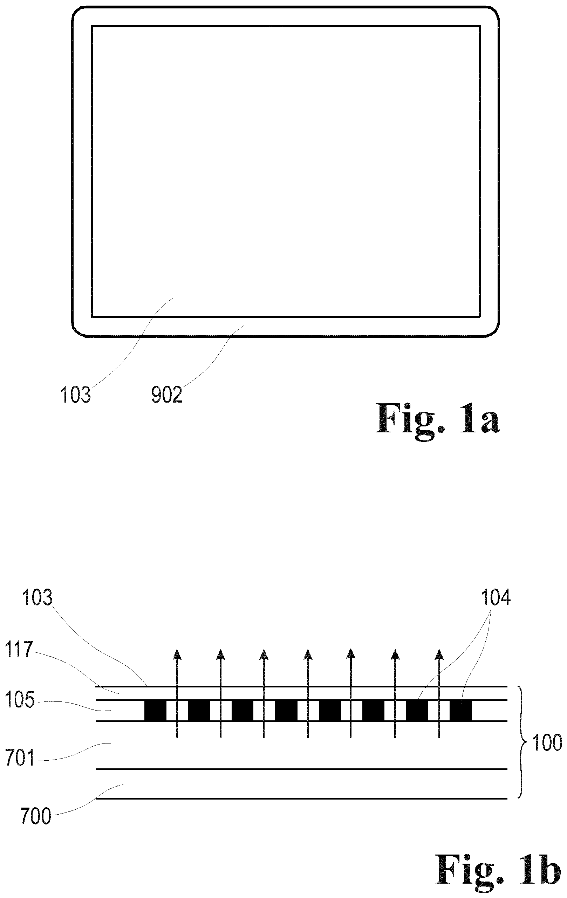

Das grundlegende Design einer Vorrichtung zur Aufnahme von Abdrücken von durchbluteten Hautbereichen menschlicher Autopodien 102 oder Teilen davon sowie zur multispektralen Aufnahme von Dokumenten 118, wie Identitätskarten oder Personalausweisen, ist in Fig. 1 in zwei Teilabbildungen (Fig. 1a und Fig. 1b) dargestellt.

Fig. 1a zeigt eine Draufsicht auf eine Vorrichtung zur Aufnahme von solchen Abdrücken und Dokumenten 118. In dieser Ansicht sind eine Auflagefläche 103 und ein Rahmen 902 zu sehen. Diese Ansicht ist auch die, die ein Anwender der Vorrichtung hauptsächlich sieht. Die Auflagefläche 103 ist im Allgemeinen die Grenzfläche einer Schutzschicht 117, die die darunter liegenden elektronischen Komponenten einer Sensorschicht 105 vor Schmutz und Kratzern schützt. Der Anwender legt seine aufzunehmenden Autopodien 102 oder Dokumente 118 zur Aufnahme auf die Auflagefläche 103.

Fig. 1b ist ein Teil eines Schnittes durch die einen Schichtkörper 100 enthaltende Vorrichtung. Die Oberseite des Schichtkörpers 100 mit der Schutzschicht 117 bildet die Auflagefläche 103. Letztere ist die obere Grenzfläche der Schutzschicht 117.

Auf der anderen Seite der Schutzschicht 117, der Auflagefläche 103 abgewandt, befindet sich die Sensorschicht 105. Diese enthält lichtempfindliche Elemente 104, die in einem ersten regelmäßigen Pixelraster angeordnet sind. Die lichtempfindlichen Elemente 104 sind beispielsweise Photodioden, die innerhalb der Sensorschicht 105 durch eine elektronische Verschaltung, beispielsweise durch TFT-Technologie, auslesbar sind und zusätzliche Elektronik zur Steuerung der Belichtungszeit aufweisen. Unterhalb der Sensorschicht 105, also auf der der Auflagefläche 103 abgewandten Seite, befindet sich eine zumindest im sichtbaren Wellenlängenbereich transparente Trägerschicht 701. Das Material dieser Schicht ist beispielsweise Glas oder ein transparenter Kunststoff. Sie ist im Allgemeinen das Substrat, auf dem die elektronischen Komponenten des Sensors, wie beispielsweise die lichtempfindlichen Elemente 104 und deren Elektronik zum Auslesen und zum Steuern der Belichtungszeit, appliziert wurden und ist somit mit der Sensorschicht 105 direkt verbunden. Wiederum unterhalb dieser transparenten Trägerschicht 901 befindet sich die primäre Leuchtschicht 700. Sie sendet Licht im sichtbaren Wellenlängenbereich aus und sorgt damit dafür, das das Objekt, das auf die Auflagefläche 103 aufgelegt wurde, zur Bildaufnahme beleuchtet wird. Das Wellenlängenspektrum, das in dieser primären Leuchtschicht 700 erzeugt wird, ist idealerweise passend zur spektralen Empfindlichkeit der lichtempfindlichen Elemente 104 in der Sensorschicht 105 ausgebildet. Wesentliche Anteile der Beleuchtung 114 der primären Leuchtschicht 703 gelangen durch die transparente Trägerschicht 701, durch die Sensorschicht 105 sowie durch die Schutzschicht 117 und die Auflagefläche 103 hindurch, so dass sie das Objekt zur Bildaufnahme beleuchten können.

Die Vorrichtung gemäß der Erfindung, wie in Fig. 1a und 1b im Grundaufbau gezeigt, und das zugehörige Verfahren zeichnen sich durch eine Kombination mehrerer optischer Direkt-Aufnahmen bei jeweils verschiedenen Beleuchtungseinstellungen aus. Die Dynamik und das Signal-Rausch-Verhältnis (SNR) lassen sich damit zusätzlich erhöhen. Diese Bildverbesserungen und die mögliche alleinige Nutzung des Umgebungslichts zur Beleuchtung eines Aufnahmeobjekts sind vornehmlich für die Aufnahme von Hautbereichen relevant, da Dokumente 118 im Allgemeinen das Umgebungslicht komplett abschirmen und gezielte bzw. spezielle Beleuchtungsarten benötigen.

### Flexible Beleuchtungseinstellung

Im Grundmodus wird das Sensorarray mit einer festen Wiederholrate ausgelesen. Dadurch ergibt sich die Integrationszeit für jedes der lichtempfindlichen Elemente 104, also jenes Zeitintervall, in dem jedes der lichtempfindlichen Elemente 104 das Licht integrierend aufnimmt. Durch eine Belichtungszeitsteuerung, die im einfachsten Fall durch einen zusätzlichen Transistor in der Pixelschaltung realisiert wird, ist es möglich, jedes Pixel vor Ablauf dieser Integrationszeit auszulesen. Somit kann bei einer festen Bildwiederholrate die Empfindlichkeit des Sensors je nach Situation eingestellt werden.

Unterschiedliche Situationen für einen kombinierten Hautabdruck- und Dokument-Aufnahmesensor sind:
(i) das Aufnehmen und Auslesen von kontrastreichen Hautabdruckbildern (hier addiert sich das Umgebungslicht zur optional aus der Vorrichtung bereitgestellten "künstlichen" Beleuchtung),
(ii) das farbige Aufnehmen und Auslesen von Dokumenten 118 geschieht durch mehrere Aufnahmen bei unterschiedlichen Wellenlängenbereichen, die verschiedenen Wellenlängenbereiche werden durch die in der Vorrichtung befindliche Beleuchtung bereitgestellt, Aufnahmen verschiedener Wellenlängenbereiche werden optional per Software zu einem Farbbild gewichtet überlagert,
(iii) das (bei definierten Wellenlängen) multispektrale Aufnehmen und Auslesen von Sicherheitsmerkmalen von Dokumenten 118, wobei das Dokument 118 dabei beispielsweise im IR- und / oder UV-Bereich beleuchtet wird und hierbei die Sensitivität des Sensors in Abhängigkeit von seiner spektralen Empfindlichkeit und der spektralen Beleuchtungsintensität angepasst werden muss,
(iv) das bei unterschiedlichen Wellenlängen schmalbandige Aufnehmen und Auslesen von Hautabdruckbildern zur Lebenderkennung (Anti-Spoofing), bei dem die unterschiedliche Sensitivität des Sensors und die unterschiedliche Beleuchtungsstärke der Lichtquelle(n) kompensiert werden müssen.

Zusätzlich zu den vorstehend erwähnten unterschiedlichen Aufnahmeanforderungen spielt die Umgebungslichtsituation eine entscheidende Rolle, die vorzugsweise bei jeder Einzelaufnahme von Hautabdrücken in einer vorgeschalteten Kalibrierbildaufnahme erfasst und entsprechend berücksichtigt werden muss. Das kann einerseits durch Ausnutzung des Umgebungslichts oder andererseits durch Unterdrückung oder Kompensation mittels der shuttergesteuerten Belichtungszeitanpassung erfolgen.

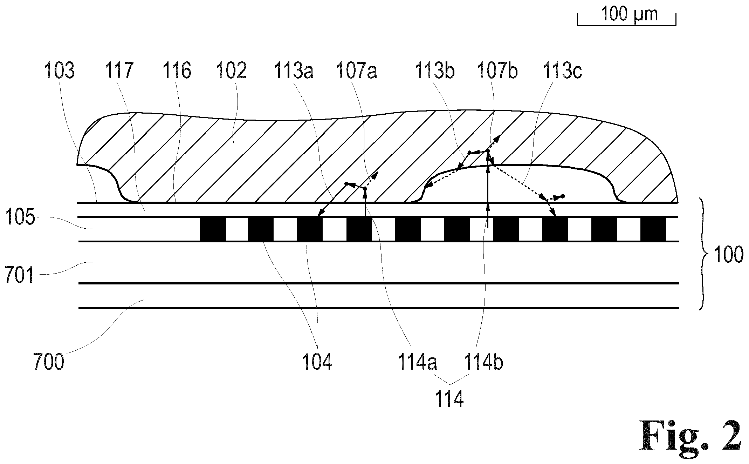

Fig. 2 zeigt das der Erfindung zugrunde liegende Prinzip zur Erzeugung einer kontrastreichen Aufnahme von Handabdruckdetails mit einem Kontrast > 0,4. Ein Autopodium 102 kontaktiert die Auflagefläche 103 im Bereich 116. Lichtanteile der Beleuchtung 114 der primären Leuchtschicht 700 gelangen durch die transparente Trägerschicht 701, durch die Sensorschicht 105, durch die Schutzschicht 117 und durch die Auflagefläche 103 hindurch.

Ein Beleuchtungsanteil 114a des Beleuchtungslichts 114 aus der primären Leuchtschicht 700 dient der Beleuchtung der Hautberge, koppelt über die Hautberge (Papillarlinien) in die Haut ein und erzeugt (i) über die Hautberge eingekoppeltes Streulicht 107a, das vorwärts streut und nicht direkt von den lichtempfindlichen Elementen 104 der Sensorschicht 105 detektiert wird, und (ii) einen in den Hautbergen gestreuten detektierten Beleuchtungsanteil 113a, der rückwärts streut, aus der Haut auskoppelt, durch die Auflagefläche 103 und die Schutzschicht 117 in die Sensorschicht 105 gelangt und dort von den lichtempfindlichen Elementen 104 detektiert wird.

Ein anderer Beleuchtungsanteil 114b des Beleuchtungslichts 114 aus der primären leuchtschicht 700 dient der Beleuchtung der Hauttäler und erzeugt (i) über das Hauttal eingekoppeltes Streulicht 107b, das vorwärts gestreut und nicht von den lichtempfindlichen Elementen 104 detektiert wird, und (ii) einen im Hauttal gestreuten und nicht detektierten Beleuchtungsanteil 113b, der im Bereich des Hauttals (Papillarkörperreihe) rückwärts gestreut wird, aus der Haut ausgekoppelt und an anderer Stelle aufgrund des Auskoppelwinkels und der Geometrie des Hauttals wieder einkoppelt und somit nicht direkt von den lichtempfindlichen Elementen 104 detektiert wird und (iii) einen im Hauttal gestreuten und detektierten Beleuchtungsanteil 113c, der im Hauttal rückwärts gestreut wird, aus der Haut in das Luftvolumen, das das Hauttal und die Auflagefläche 103 umschließen, auskoppelt, durch die Auflagefläche 103 und die Schutzschicht 117 in die Sensorschicht 105 gelangt und dort durch die lichtempfindlichen Elemente 104 detektiert wird.

Ein Anteil des über einen Hautberg eingekoppelten Streulichts 107a davon dient der Beleuchtung der Hautberge und Anteile des über ein Hauttal eingekoppelten Streulichts 107b werden hauptsächlich vorwärts gestreut und gelangen nicht mehr in Richtung der Sensorschicht 105 aus der Haut heraus. Andere Anteile des in den Hautbergen gestreuten Lichtes 113a werden rückwärts gestreut, koppeln aus der Haut aus, gelangen durch die Auflagefläche 103 und die Schutzschicht 117 in die Sensorschicht 105 und werden dort von den lichtempfindlichen Elementen 104 detektiert. Da die Haut und die Schutzschicht 117 ähnliche Brechzahlen haben, gibt es bei diesem Grenzübergang kaum Reflexionen. Ein weiterer Anteil des in den Hauttälern gestreuten Lichtes 113b wird rückwärts gestreut, koppelt aus der Haut aus und an anderer Stelle, aufgrund des Auskoppelwinkels und der Geometrie des Hauttales, wieder ein. Dieser Lichtanteil 113b kann also nicht direkt in der Sensorschicht 105 detektiert werden. Ein letzter Anteil des rückwärts im Hauttal gestreuten Lichtes 113c koppelt aus der Haut aus in das Luftvolumen, das das Hauttal und die Auflagefläche 103 umschließen. Dieser Lichtanteil 113b gelangt dann durch die Auflagefläche 103 und die Schutzschicht 117 in die Sensorschicht 105.

Bei den Grenzübergängen zwischen der Haut des Hauttals und dem Luftvolumen im Hauttal sowie beim Grenzübergang zwischen dem Luftvolumen im Hauttal und der Schutzschicht 117 entstehen aufgrund der unterschiedlichen Brechzahlen von Haut (rund 1,5), Luft (rund 1,0) und der Schutzschicht 117 (rund 1,5) Reflexionen. Diese Reflexionen im Hauttal sowie der gestreute und nicht detektierte Beleuchtungsanteil 113b, bewirken, dass der in Hautbergen gestreute detektierte Beleuchtungsanteil 113a wesentlich größer ist, als der in Hauttälern gestreute und detektierte Beleuchtungsanteil 113c. Das gesamte Streuproblem ist für verschiedene Brechzahlen der Schutzschicht 117 und Wellenlängen der primären Leuchtschicht 700 berechnet. Es ergibt sich für den gesamten optischen Wellenlängenbereich ein Kontrast zwischen Hautberg und Hauttal von 0,5 (+/- 0,1).

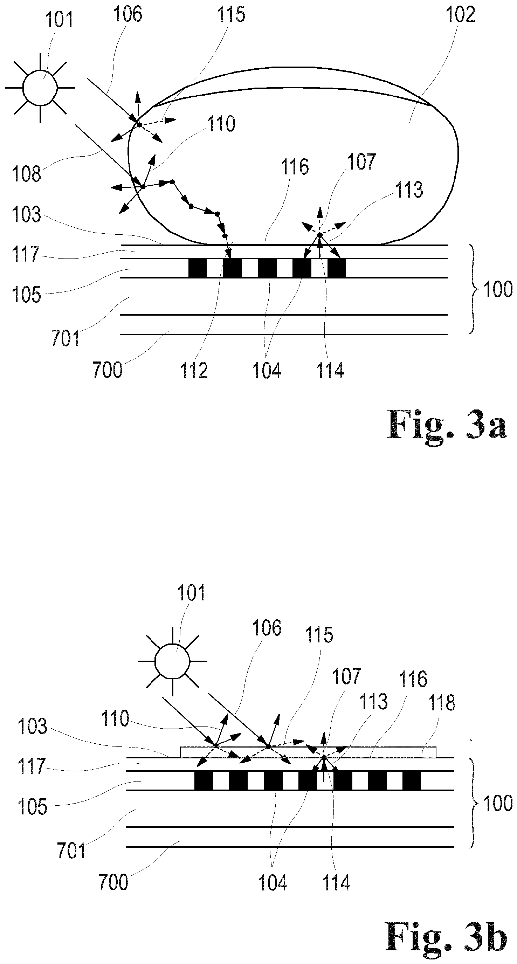

Fig. 3a zeigt die prinzipielle Funktionsweise der erfindungsgemäßen Vorrichtung zur Aufnahme von Hautabdruckbildern lebender Autopodien 102 unter Einwirkung von Umgebungslicht 101.

Der vom Objekt kontaktierte Bereich 116 der Auflagefläche 103 ist hier der aufzunehmende Hautbereich eines Autopodiums 102.

Das Beleuchtungslicht 114 der primären Leuchtschicht 700 erzeugt in der Haut gestreutes Licht der Beleuchtung 107. Der rückwärts gestreute Anteil des Beleuchtungslichts 113, der detektiert wird, gelangt durch die Auflagefläche 103 und die Schutzschicht 117 in die Sensorschicht 105 und wird dort von den lichtempfindlichen Elementen 104 detektiert. Details zur kontrastreichen Bildaufnahme von Hautabdruckdetails sind im Text zur Fig. 2 beschrieben.

Neben dem Beleuchtungslicht 114 der primären Leuchtschicht 700 werden die Autopodien 102 durch das Umgebungslicht 101 beleuchtet. Anteile 106 des Umgebungslichts 101 mit Wellenlängen kleiner als 600 nm erzeugen gestreutes Umgebungslicht 115 mit Wellenlängen kleiner als 600 nm und werden schon kurz nach dem Eindringen in die Haut absorbiert. Die Eindringtiefe für Licht mit Wellenlängen < 600 nm beträgt je nach spezieller Wellenlänge teilweise deutlich weniger als 0,5 mm.

Lichtanteile im sichtbaren Spektralbereich > 600 nm werden in Haut und Gewebe bei wesentlich geringerer Absorption gestreut. Die Eindringtiefe für sichtbares Licht mit Wellenlängen größer als 650 nm ist je nach Wellenlänge bis zu 0,3 cm. Somit können Anteile 108 des Umgebungslichtes 101 mit Wellenlängen größer als 600 nm, die gestreutes Umgebungslicht 110 mit Wellenlängen größer als 600 nm erzeugen, teilweise durch das aufgelegte Autopodium 102 gelangen und anteilig die Auflagefläche 103 und die Schutzschicht 117 passieren und in die Sensorschicht 105 gelangen und von den lichtempfindlichen Elementen 104 detektiert werden.

Einer Überbelichtung bei zu großer Intensität des Umgebungslichtes 101 (z. B. bei direkter Sonneneinstrahlung) wird durch die elektronisch regulierbare Belichtungszeit in der Steuerung der lichtempfindlichen Elemente 104 in der Sensorschicht 105 entgegengewirkt.

Die Belichtungszeit wird zur Erzielung der optimalen Bildqualität, insbesondere der optimalen Grauwertverteilung im Bild, angepasst.

Fig. 3b zeigt die prinzipielle Funktionsweise der erfindungsgemäßen Vorrichtung zur Aufnahme eines Dokuments 118 unter Einwirkung von Umgebungslicht 101.

Der vom Objekt kontaktierte Bereich 116 der Auflagefläche 103 ist hier der aufzunehmende Bereich des Dokumentes 118.

Befindet sich auf der Auflagefläche 103 ein Dokument 118, so erzeugt das Beleuchtungslicht 114 der primären Leuchtschicht 700 auf der der Auflagefläche 103 zugewandten Seite des Dokuments 118 gestreutes Licht der Beleuchtung 107. Der rückwärts gestreute Anteil des Beleuchtungslichts 113, der detektiert wird, koppelt durch die Auflagefläche 103 und die Schutzschicht 117 in die Sensorschicht 105 und wird dort von den lichtempfindlichen Elementen 104 detektiert. Rückwärtsstreuung bedeutet hier im Spezialfall auch spiegelnde Reflexion.

Neben dem Beleuchtungslicht 114 durch die primäre Leuchtschicht 700 wird das Dokument 118 auch durch das Umgebungslicht 101 beleuchtet. Anteile 106 und 108 des Umgebungslichts 101 mit Wellenlängen kleiner als 600 nm und größer 600 nm erzeugen gestreutes Umgebungslicht 115 und 110 mit Wellenlängen kleiner als 600 nm und größer als 600 nm auf der der Auflagefläche 103 abgewandten Seite des Dokumentes 118. Die Eindringtiefe für Licht in typischen Materialen eines Dokuments 118, wie Papier oder Kunsstoff, ist so gering, dass typischerweise keine Anteile des Umgebungslichtes 101 durch das Dokument gelangen und von den lichtempfindlichen Elementen 104 detektiert werden können.

Gelangen doch Anteile des Umgebungslichtes 101 durch das Dokument 118 hindurch, wird einer Überbelichtung bei zu großer Intensität des Umgebungslichtes 101 (z. B. bei direkter Sonneneinstrahlung) durch die elektronisch regulierbare Belichtungszeit in der Steuerung der lichtempfindlichen Elemente 104 in der Sensorschicht 105 entgegengewirkt.

Die Belichtungszeit zur Erzielung der optimalen Bildqualität, insbesondere der optimalen Grauwertverteilung im Bild, wird angepasst.

Die Direktaufnahme von Hautabdrücken lebender Autopodien 102 und Dokumenten 118 wird ohne abbildende Elemente hochauflösend unter der Bedingung ausgeführt, dass der Abstand zwischen Auflagefläche 103 und lichtempfindlichen Elementen 104 der Sensorschicht 105 kleiner ist als der durch das Pixelraster definierte Pixelmittenabstand. Dieses Kriterium ist notwendig, da sich aufgrund der Ausbreitung des Lichts zwischen Auflagefläche 103 und Sensorschicht 105 die CTF mit größer werdendem Abstand verschlechtert.

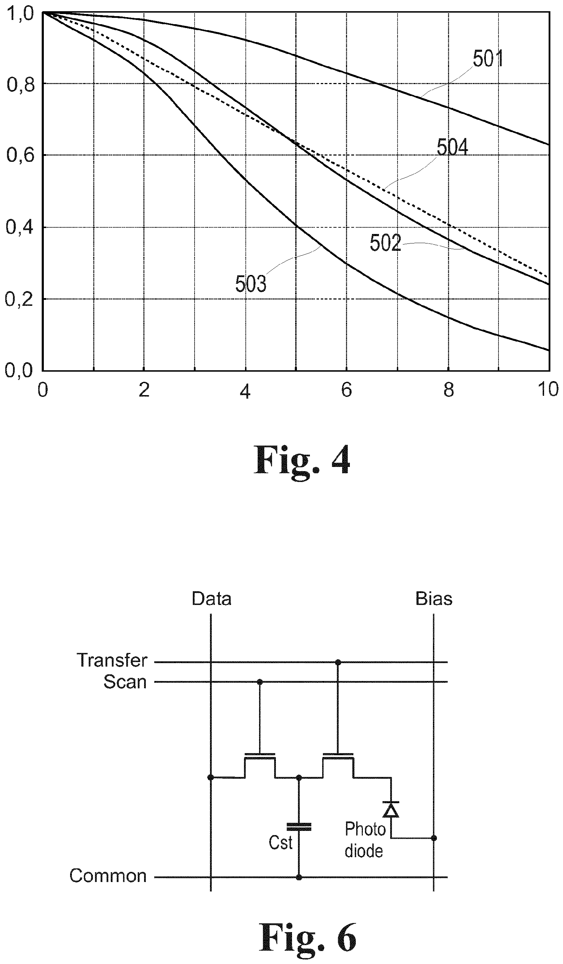

Fig. 4 zeigt beispielhaft die CTF für 20 µm Abstand 501, 40 µm Abstand 502 und 60 µm Abstand 503. Auf der Abszisse ist die Ortsauflösung in Linienpaare pro Millimeter (LP/mm) aufgetragen, auf der Ordinate ist der Kontrast (Michelson-Kontrast) aufgetragen. Die FBI-Anforderungen 504 bezüglich CTF an ein 500-ppi-System sind ebenfalls dargestellt. Ein 500-ppi-System bedingt nach dem Nyquist-Theorem eine Periode, als einen Pixelmittenabstand, von mindestens 50,8 µm. Setzt man diesen Wert als Abstand zwischen Auflagefläche 103 und Sensorschicht 105 an, so können die FBI-Anforderungen 504 nicht mehr erfüllt werden. Es muss also gelten: der Abstand zwischen Auflagefläche 103 und den lichtempfindlichen Elementen 104 in der Sensorschicht 105 muss kleiner sein als der Pixelmittabstand.

### Bildaufnahme mit angepasster Belichtungszeit

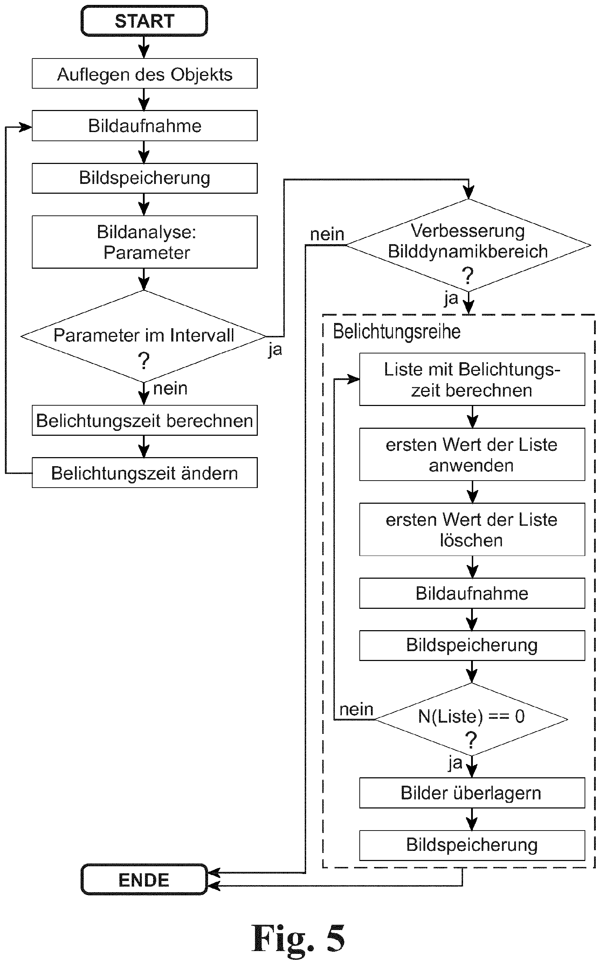

Fig. 5 zeigt das prinzipielle Verfahren zur Aufnahme eines sicherheitsrelevanten Objektes, wie eines Hautabdruckes eines lebenden Autopodiums 102 oder eines Dokumentes 118. Das Gerät befindet sich vor Beginn im Ruhemodus. Das Verfahren beginnt mit dem Start, die Vorrichtung schaltet dabei in den Bereitschaftsmodus. Dies kann automatisch durch Annäherungsdetektion oder auch manuelle Eingabe erfolgen. Nach dem Auflegen des Objektes auf die Auflagefläche 103 schaltet die Vorrichtung automatisch durch Detektion des Kontaktes zwischen Objekt und Auflagefläche 103 oder durch manuelle Eingabe in den Aufnahmemodus und die Bildaufnahme erfolgt. Dabei wird das Signal der lichtempfindlichen Elemente 104 ausgelesen. Die lichtempfindlichen Elemente 104 sind beispielsweise mittels TFT-Technologie (TFT, Thin Film Transistor) gesteuert und werden mit Hilfe weiterer integrierter Elektronik ausgelesen. Die darauf folgende Bildspeicherung verschiebt die ausgelesenen Daten in einen lokalen, innerhalb der Vorrichtung ausgebildeten Speicher oder aber über eine Computerschnittstelle, wie beispielsweise USB, oder auch eine drahtlose Verbindung, wie bespielsweise Bluetooth oder WLAN, in einen Speicher, der sich in einem externen Computer oder einem Mobilgerät, wie bespielsweise einem Tablet-Computer oder Smartphone, befindet. Als nächstes wird das aufgenommene und abgespeicherte Bild analysiert. Dies geschieht entweder innerhalb der Vorrichtung durch beispielsweise mindestens eine interne Recheneinheit (beispielsweise frei programmierbare Logikschaltung (FPGA), Signalprozessor, Mikrokontroller). Bei der Bildanalyse wird/werden ein oder mehrere Parameter bestimmt, die einerseits Aussagekraft über die Qualität der Aufnahme liefern und sich andererseits durch Anpassung der Belichtungszeit verändern. Beispielsweise lässt sich aus der Grauwertverteilung ein solcher Paramter erzeugen, bespielsweise über ein Grauwert-Histogramm. Sind die Grauwerte im Bild im Wesentlichen unter einem bestimmten Schwellwert verteilt, so ist das Bild unterbelichtet. Ist die Grauwerthäufigkeit bis zum Maximum ansteigend verteilt, so ist das Bild überbelichtet. Ein definierter Bereich dazwischen gilt als korrekte Belichtung. Dieser Sachverhalt kann auf einen oder mehrere Parameter abstrahiert werden. Es erfolgt die Abfrage, ob dieser Parameter im Intervall ist oder nicht. Befindet sich der Paramater im Intervall, war die Belichtungszeit also korrekt, wird das Verfahren mit Schritt "Ende" beendet. Die Vorrichtung schaltet aus dem Aufnahmemodus in den Bereitschaftsmodus, falls noch weitere Aufnahmen erfolgen sollen, oder in den Ruhemodus. Die Daten befinden sich weiterhin im Speicher und können weiter verwendet werden.

Wird die Abfrage "Paramter im Intervall?" mit nein beantwortet, so wird der Parameter verwendet, um eine neue Belichtungszeit zu berechnen. Ist das aufgenommene Bild beispielweise überbelichtet gewesen, so wird ein kleinerer Wert für die Belichtungszeit berechnet. Die so ermittelte neue Belichtungszeit wird an die Sensorelektronik übergeben und somit für die nächste Bildaufnahme geändert. Eine erneute Bildaufnahme, Bildspeicherung und Bildanalyse erfolgt. Typischerweise wird das zuvor aufgenommene Bild durch das neue Bild überschrieben. Falls nun der Parameter im Intervall ist, wird das Verfahren beendet, falls nicht, erfolgt eine weitere Iteration. Typischerweise wird ein Abbruchkriterium definiert. Dies beispielsweise kann das Verfahren nach einer bestimmten Anzahl von Iterationen beenden, auch wenn der Parameter im Intervall nicht erreicht wird. Der Benutzer kann dann die Information erhalten, dass die Qualitätsvorgabe nicht erreicht wurde.

Das beschriebene Verfahren kann optional erweitert werden, sodass anstelle des Verfahrensschrittes ,Ende', die optimale Belichtungszeit eine weitere Berechnung übergeben wird, in der eine ,Liste' von mindestens zwei Belichtungszeiten die mindestens eine kürzere und eine längere Belichtungszeit als die vorher berechnete optimale Belichtungszeit bestimmt wird. Dann wird Belichtungszeit des Sensorschicht 105 auf den ersten Wert der ,Liste' eingestellt. Nachfolgend wird ein Bild aufgenommen und abgespeichert. Der erste Wert der ,Liste' wird gelöscht. Ist ein weiterer Wert auf der Liste so wird die Belichtungszeit erneut auf den neuen ersten Wert der Liste gesetzt. Es findet wieder Bildaufnahme und Speicherung statt. Bei der Speicherung werden die Bilder nicht überschreiben. Dieser Teil des Verfahrens dauert so lange, bis sich kein Wert mehr auf der Liste befindet und das letzte Bild abgespeichert ist. Die Bilder werden dann mittels eines Softwarealgorithmus überlagert, sodass ein Bild mit besonders hohem Dynamikumfang entsteht. Dieses Bild wird gespeichert und steht damit zur weiteren Verwenung zur Verfügung.

Die im Verfahren in Fig. 5 beschriebene Einstellung der Belichtungszeit erfolgt elektronisch, mit Hilfe von TFT-Technologie. Das lichtempfindliche Element 104 in der Sensorschicht 105 wird mittels Leitern und genannter TFT-Technologie gesteuert und ausgelesen. Im einfachsten Fall ist dazu ein Transisor für jedes lichtempfindliche Element 104 notwendig. Durch Hinzufügen eines weiteren Transistors zum Abtransport der Elektronen sowie der entspprechenden Verschaltung ist die einfachste Form der Belichtungszeitsteuerung, der sogenannte Rolling-Shutter, möglich. Der Rolling-Shutter ist ein Belichtungsverfahren, das größtenteils in der CMOS-Sensortechnologie eingesetzt wird, sich aber auch für die TFT-Technologie eignet. Die Belichtung erfolgt im Unterschied zum Global-Shutter nicht als ,einmalige' zeitgleiche Belichtung, sondern in abgestufter Reihenfolge. Beim ,Auslösen' werden die Zeilen nacheinander, also Zeile für Zeile, belichtet. Je nach Belichtungszeit kann es dabei zu Überlappungen kommen. Ist die letzte Bildzeile vollständig belichtet, beginnt der nächste Bildeinzug wieder von vorne, bei der ersten Zeile. Durch die einfache Schaltung mit nur zwei Transistoren entsteht weniger Wärme und Stromverbrauch (dies ist gerade bei mobilder Anwendung wichtig) und das Grundrauschen ist deutlich niedriger als beim Global-Shutter, dessen vier bis fünf Transistoren vergleichsweise hohes Grundrauschen und viel Wärme produzieren. Andererseits entstehen beim Rolling-Shutter speziell bei bewegten Objekten oft Verzerrungen, die in bestimmten Anwendungen ein akzeptables Maß überschreiten. Diese Verzerrungen entstehen dadurch, dass sich das Objekt beziehungsweise die Kamera in dem Zeitraum, in dem die zeilenweise Belichtung erfolgt, weiter bewegt. Beim Auslesen der Bilddaten werden die belichteten Zeilen in der gleichen Reihenfolge wieder zu einem Gesamtbild zusammengesetzt. Bedingt durch die zeitliche Verzögerung beim Belichten der einzelnen Zeilen wird auch im zusammengesetzten Bild dieser zeitliche Versatz in Form von Verzerrungen sichtbar. Dieser Effekt wird als Rolling-Shutter-Effekt bezeichnet. Neben der Belichtungszeit spielt dabei auch die Geschwindigkeit des Sensors eine Rolle. Sie bestimmt, wie schnell die Zeilen öffnen und wieder schließen. Bei einem schnellen Sensor mit einer Bildrate von maximal 60 Bildern pro Sekunde ist der Effekt geringer, als bei einem langsamen Sensor mit zum Beispiel maximal 15 Bildern pro Sekunde. Für das statische Aufnehmen von bespielsweise Fingerabdrücken oder Dokumenten werden die dynamischen Verzerrungen eines Rolling-Shutters keine Rolle spielen hingegen dessen Vorteil des geringen Grundrauschens überwiegen. Beim der Aufnahme abgerollter Fingerabdrückeist die Umsetzung der Belichtunszeitanpassung über einen Global-Shutter geeignet, da dies ein dynamischer Prozess ist und somit Verzerrungen auftreten könnten, die nicht tolerierbar sind.

Fig. 6 zeigt ein bevorzugtes Ausführungsbeispiel für eine elektronische Schaltung eines Pixels in der Sensorschicht 105. Das lichtempfindliche Element 104 ist hier eine Photodiode. Zwei Transistoren sind dargestellt: ein Transistor schaltet die Photodiode entsprechend der Taktung, der andere Transistor führt eine zusätzliche Schaltung zum Auslesen durch und ermöglicht so eine Verkürzung des Zeitintervalls, in dem von der Photodiode Licht gesammelt wird, somit ist die Belichtungszeitsteuerung nach dem Rolling-Shutter-Prinzip realisiert.

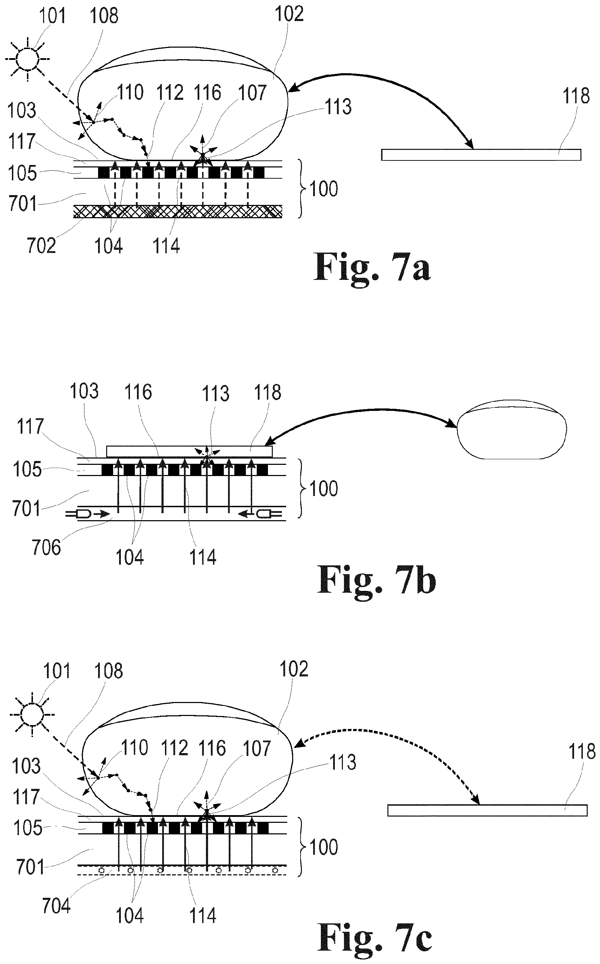

Die Beleuchtung des Objektes 102 bzw 118 erfolgt über die in Fig. 1b gezeigte primäre Beleuchtungsschicht 703. Fig. 7a, Fig. 7b und Fig. 7c zeigen bevorzugte Ausführungsbeispiele, bei denen das Objekt mit einer möglichst homogenen Beleuchtung 114 beleuchtet wird. Diese homogene Beleuchtung 114 bildet die in Fig. 1b gezeigte primäre Leuchtschicht 700. Das Objekt kann entweder ein Dokument 118 oder auch ein Autopodium 102 sein. Ist das Objekt ein Autopodium 102, so kann die Beleuchtung des Objektes auch ausschließlich durch das Umgebungslicht 101 erfolgen. Vor allem spektrale Anteile 108 des Umgebungslichts 101 mit Wellenlängen größer als 600 nm erzeugen bei üblichen Beleuchtungssituationen, beispielsweise bei direkter Deckenbeleuchtung im Raum oder direktem Sonnenlicht, einen hinreichend großen Anteil 112 des Umgebungslichtes 101, der detektiert wird.

Fig. 7a zeigt ein bevorzugtes Ausführungsbeispiel, bei dem die primäre Leuchtschicht 700 des prinzipiellen Schichtaufbaus, bekannt aus Fig. 1b, Photoluminiszenzfolie 702 enthält.

Fig. 7b zeigt ein bevorzugtes Ausführungsbeispiel, bei dem die primäre Leuchtschicht 700 des prinzipiellen Schichtaufbaus, bekannt aus Fig. 1b, eine Lichtleitschicht 706, bestehend aus LEDs oder OLEDs, und zusätzliche optische Elemente, wie Wellenleiter, optische Gitter, Spiegel und Diffusoren, enthält. Die zusätzlichen optischen Elemente verteilen das Licht der LEDs oder OLEDs möglichst homogen in der primären Leuchtschicht 700 und sorgen dafür, dass das Beleuchtungslicht 114 durch die primäre Leuchtschicht 700 die gesamte Auflagefläche 103 mit möglichst gleicher Intensität passiert.

Fig. 7c zeigt ein bevorzugtes Ausführungsbeispiel, bei dem die primäre Leuchtschicht 700 des prinzipiellen Schichtaufbaus, bekannt Fig. 1b, eine Hintergrundbelechtung ist, wie sie aus Flachbildschirmen bekannt ist, die ihr Licht mittels Kaltkathodenröhren 704 erzeugt. Diffusoren oder lichtleitende oder spiegelnde Elemente sind zur Homogenisierung und gerichteten Abstrahlung typerischerweise vorhanden.

### Angepasste Beleuchtung zur Bildoptimierung und Farbaufnahme

Die Anpassung der Belichtungszeit dient in erste Linie dazu, bei zu großen Intensitäten des Umgebungslichts 101 die lichtempfindlichen Elemente 104 der Sensorschicht 105 weniger empfindlich zu stellen, um ihn so bei der Bildaufnahme nicht zu übersteuern, da bei einer Übersteuerung Bildinformationen verlorengehen.

Durch die Anpassung der Belichtungszeit in Form von (i) strukturierter Beleuchtung und (ii) adaptiver Anpassung der Beleuchtungsstärke können die Resistenz gegen störende Einflüsse durch Umgebungslicht und Qualität der Bildaufnahme weiter erhhöht werden. Zusätzlich ist durch (iii) Anpassung der Beleuchtungsfarbe (wellenlängenbegrenzte Spektralbereiche) eine mehrfarbige Aufnahme von Objekten, insbesondere Farbbildaufnahmen bei Dokumenten möglich.

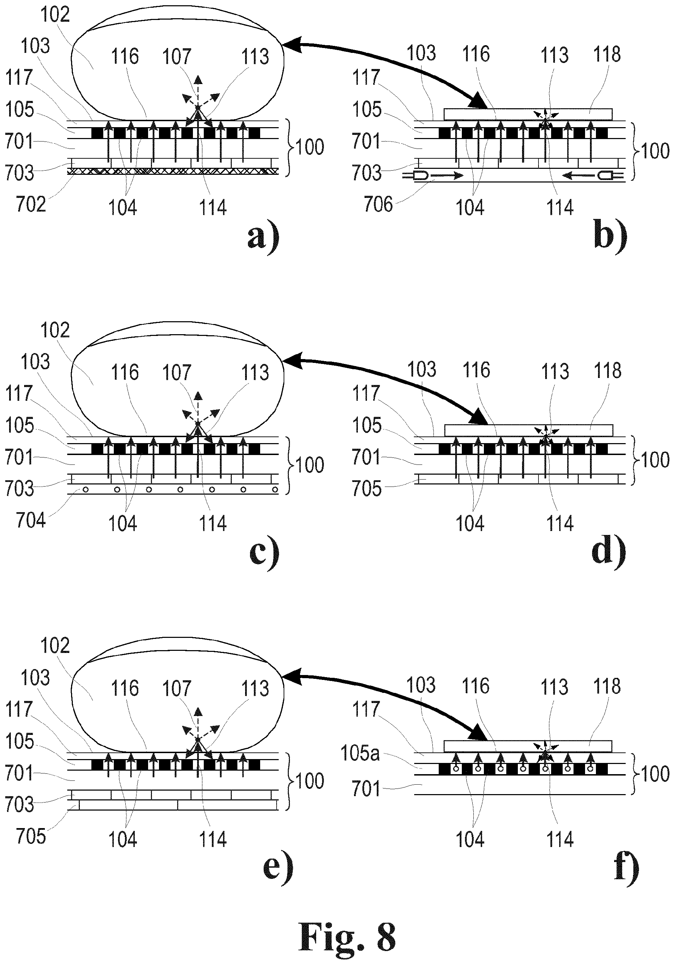

Fig. 8a bis 8f zeigen besonders bevorzugte Ausführungsbeispiele, bei denen das Objekt mit einer Beleuchtung 114 beleuchtet wird, die lokal an- und ausschaltbar ist. Dadurch ist strukturierte Beleuchtung möglich, die Fälschungserkennung erleichtern und die Bildqualität verbessern kann. Außerdem ermöglicht sie eine direkte Darstellung von Informationen auf der Auflagefläche 103 und somit eine intuitive und interaktive Benutzeroberfläche.

Diese lokal an- und ausschaltbare Leuchtschicht bildet die in Fig. 1b gezeigte primäre Leuchtschicht 700. Das Objekt kann entweder ein Dokument 118 oder auch ein Autopodium 102 sein.

Fig. 8a, Fig. 8b, Fig. 8c und Fig. 8e zeigen jeweils die erfindungsgemäße Vorrichtung, bei der die strukturierte Beleuchtung durch eine in Transmission lokal schaltende Schicht 703, beispielsweise eine schaltbare Flüssigkristallschicht, realisiert wird. In diesem Fall ist eine homogene Hintergrundbeleuchtung notwendig, da die lokal schaltende Schicht 703 selbst kein Licht erzeugt. Diese Hintergrundbeleuchtung ist dabei unterhalb, also auf der der transparenten Trägerschicht 901 abgewandten Seite, der lokal schaltenden Schicht 703 angeordnet.

Die Hintergrundbeleuchtung kann wie in Fig. 8a Photoluminiszenzfolie 702 oder wie in Fig. 8b eine Lichtleitschicht 706, bestehend aus OLEDs oder LEDs und Strahlformungs- und Wellenleitelementen (vgl. Fig. 7b), oder Kaltkathodenröhren 704 (vgl. Fig. 7c) oder auch eine zweidimensionale aktive LED- oder OLED-Beleuchtungsanordnung 705 (siehe Fig. 8d und 8e) sein (z.B. eine Matrix).

In den Ausführungsbeispielen gezeigt in Fig. 8d und Fig. 8f ist jeweils keine lokal schaltende Schicht 703 in Verbindung mit einer Hintergrundbeleuchtung notwendig. Hier besitzt die ein- und ausschaltbare Schicht 703 selbst leuchtende LED oder OLED-Elemente.

Fig. 8d zeigt die primäre Leuchtschicht 700 umgesetzt als LED oder OLED-Matrix 705.

Fig. 8f zeigt ein Ausführungsbeispiel, bei dem die primäre Leuchtschicht 700 als aktive LED oder OLED-Matrix 705 innerhalb der Sensorschicht 105 als kombinierte Sender-Empfängerschicht 105a ausgeführt ist. Die singulären Lichtquellen sind dabei in einem zweiten Raster versetzt zum Raster der lichtempfindlichen Elemente 104 angordnet.

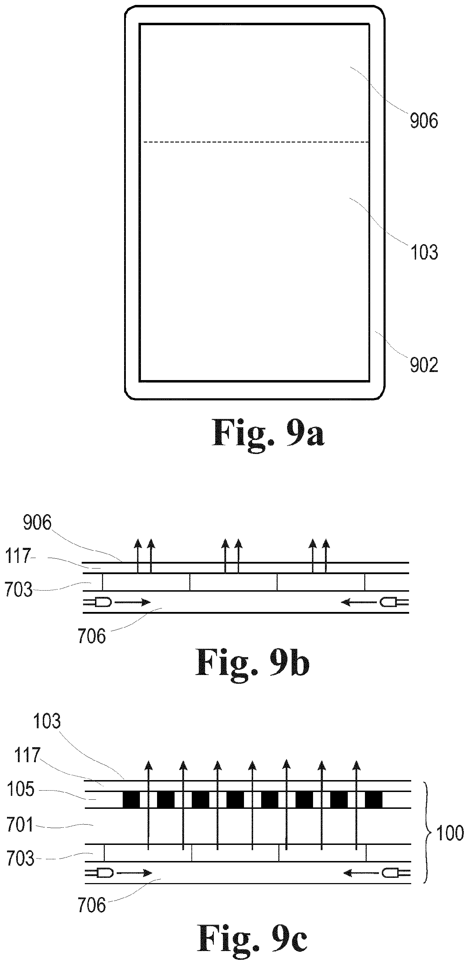

Fig. 9a, Fig. 9b und Fig. 9c zeigen ein besonders bevorzugtes Ausführungsbeispiel. Hierbei wird die primäre Leuchtschicht 700 durch eine lokal schaltende Schicht 703 in Verbindung mit einer Lichtleitschicht 706 realisiert, vgl. dazu Fig. 8b. Dadurch ist einerseits eine direkte Darstellung von Informationen und eine interaktive und intuitive Benutzerinteraktion direkt auf der Auflagefläche 103 möglich, andererseits gibt es daneben eine reine Darstellungsfläche 906 zur zusätzlichen Darstellung von Informationen. Die Darstellungsfläche 906 lässt sich außerdem optional mit Touchfunktion beispielsweise zum Einlesen von Unterschriften ausstatten.

Fig. 9b zeigt den Schichtaufbau der durch die Darstellungsfläche 906 abgeschlossen wird. Er besteht aus der Lichtleitschicht 706, der lokal schaltbaren Schicht 703, der Schutzschicht 117 und der Auflagefläche 103, besitzt also keine Sensorschicht 105. Fig. 9c zeigt den Schichtaufbau der durch die Auflagefläche 103 abgeschlossen wird (vgl. Fig. 8b).

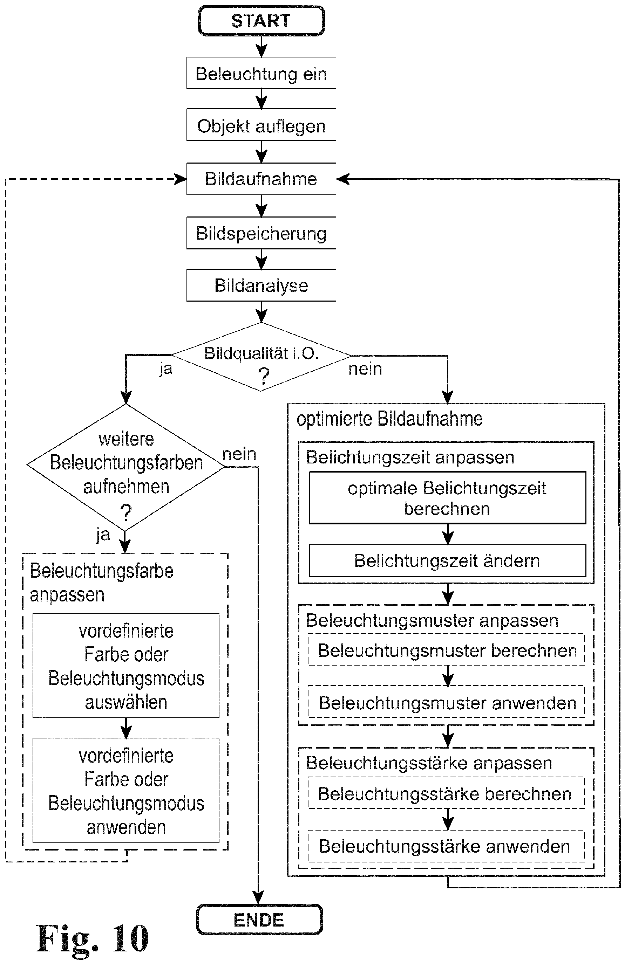

Fig. 10 zeigt als bevorzugtes Ausführungsbeispiel ein Verfahren zur Aufnahme eines sicherheitsrelevanten Objektes, wie eines Hautabdruckes eines lebenden Autopodiums 102 oder eines Dokumentes 118, wobei zusätzlich zur Anpassung der Belichtungszeit (durch Steuerung der Shutterpixel ders Sensorschicht 105) das Beleuchtungsmuster (als 2D-Intensitätsverteilung) und die Beleuchtungsstärke (in Form der Gesamthelligkeit) angepasst werden können. Den prinzipiellen Verfahrensverlauf zeigt Fig. 5. Die zwei letztgenannten Anpassungen können optional und in beliebiger Reihenfolge ablaufen, idealerweise arbeiten sie mit der Belichtungszeitsteuerung zusammen und aufeinander abgestimmt, um das beste Ergebnis zu erhalten. Die optimierte Bildaufnahme kann iterativ stattfinden, vgl. Fig. 5.

### (i) Beleuchtungsmuster anpassen

Die Anpassung des Beleuchtungsmusters setzt eine Vorrichtung mit lokal an- und ausschaltbarer Beleuchtung, wie in den Beispielen von Fig. 8a-f gezeigt, voraus. Bei diesem Verfahren wird gezielt eine inhomogene Beleuchtung anwendet, um Inhomogenitäten im Bild, wie beispielsweise störende Effekte von inhomogenem Umgebungslicht 101, lokal zu kompensieren. Dazu wird aus dem gespeicherten Bild der Bildhintergrund berechnet. Unter Bildhintergrund versteht man dabei den Helligkeitsverlauf hinter den Detailstrukturen. Bei Fingerabdrücken bedeutet das, dass die Papillarlinien, beziehungsweise die feinen Abbildungen der Berge und Täler des Fingerabdrucks, aus dem Bild entfernt werden. Dazu kann beispielsweise ein Schließungsfilter, also eine Kombination aus Minimal- und Maximalfilter benutzt werden. Das Beleuchtungsarray hat im Allgemeinen zumindest eine andere Pixelzahl und einen anderen Helligkeitswertebereich als die Sensorschicht 105. Das gespeicherte Bild wird an die technischen Gegebenheiten der Beleuchtungsmatrix angepasst. Die Anpassung enthält beispielsweise Bildbearbeitungsalgorithmen wie Skalierung, Offset und Invertierung. Die spezielle Ausbreitungscharakteristik des Lichts in einem speziellen Objekt wird durch zusätzliche Algorithmen auf das Bild berücksichtigt. Nach Berechnung des Beleuchtungsmusters wird die primäre Beleuchtungschicht 703 mit diesem angesteuert, also das Beleuchtungsmuster angewendet.

### (ii) Beleuchtungsstärke anpassen

Während die Anpassung der Belichtungszeit in erster Line dazu dient, bei zu großen Intensitäten des Umgebungslichtes 101 die lichtempfindlichen Elemente 104 der Sensorschicht 105 weniger empfindlich zu stellen, um sie so bei der Bildaufnahme nicht zu übersteuern, da bei der Übersteuerung Bildinformationen verloren gehen. Dagegen dient die Anpassung des Beleuchtungsmusters dazu, eine bessere Bildqualität zu erhalten, da damit der Bildhintergrund homogenisiert und der Bildinhalt nicht verfälscht wird.

Die Anpassung der Beleuchtungsstärke ist im Unterschied zu den vorgenannten Qualitätsmerkmalen insbesondere bei niedrigen Intensitäten des Umgebungslichtes 101 vorgesehen. Falls beispielsweise die Belichtungszeit schon maximal eingestellt ist und das Grauwerthistogramm des gespeicherten Bildes dennoch eine Unterbelichtung zeigt, so kann die Beleuchtungsstärke insgesamt erhöht werden durch entsprechende Ansteuerung der primären Leuchtschicht 700.

### (iii) Beleuchtungsfarbe anpassen

Die Anpassung der Beleuchtungsfarbe kann einerseits der Optimierung der Bildqualität dienen. Je nach Farbe des Objektes, also insbesondere anhand dessen spektraler Eigenschaften kann eine zur Bildaufnahme günstige Beleuchtungsfarbe eingestellt werden. Andererseits ist durch mehrere verschiedenfarbige Aufnahmen und deren Überlagerung eine Erzeugung echter Farbbilder möglich.

Fig. 10 zeigt den groben Verfahrensablauf, wobei bei der Überprüfung Parameter im Intervall' in diesem Falle zusätzlich zu den Bildoptimierungsparametern noch eine Liste mit Beleuchtungsfarben durchgegangen wird, deren erstes Listenelement nach jeder Bildaufnahme gelöscht wird, sodass am Ende mehrere Aufnahmen, die bei unterschiedlichen Spektralintervallen aufgenommen wurden, gespeichert sind. Diese Aufnahmen werden zum Schluss, durch gängige Softwarealgorithmen mit entsprechender Umrechnung auf die gewüschten Farbkanäle überlagert, sodass ein echtes Farbbild entsteht. Insbesondere ist so die Aufnahme von farbigen Dokumentenbildern möglich.

Voraussetzung für die Farbbilderzeugung ist, dass die Vorrichtung eine primäre Leuchtschicht 700 enthält, die einstellbare Beleuchtungsfarben zulässt. Dies kann beispielsweise durch eine lokal schaltende Schicht 703 (bspw. schaltbare Flüpssigkristallschicht) mit verschiedenen Farbfiltern (z.B. Rot-, Grün- und Blaufilter) auf deren schaltbaren Segmenten (Pixeln) und eine entsprechend breitbandige Hintergrundbeleuchtung realisiert werden. Die Kombination dieser Komponenten können beispielsweise als LCD (liquid crystal device) ausgeführt sein.

Ausführungsbeispiele sind in Fig. 8a-8c sowie Fig. 8e, jeweils mit verschiedenen Hintergrundbeleuchtungen durch Änderung des Emissionsprinzips der Leuchtschicht 700, dargestellt. Eine weitere Möglichkeit der Realisierung ist die Verwendung einer zweidimensionalen LED oder OLED-Anordnung 705 mit verschiedenfarbigen LEDs oder OLEDs, wie in Fig. 8d gezeigt, oder die Verwendung verschiedenfarbiger LEDs oder OLEDs in einer kombinierten Sende-Empfänger-Schicht 105a, wie sie stilisiert in Fig. 8f dargestellt ist.

### (iv) Fälschungserkennung

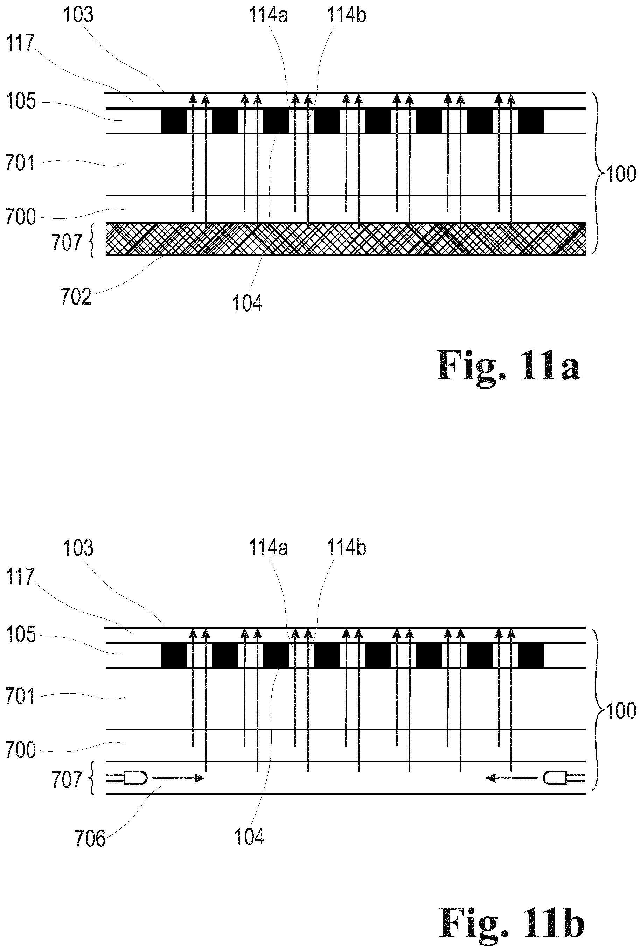

Die Fig. 11a und Fig. 11b zeigen besonders bevorzugte Ausführungsbeispiele, speziell zur Fälschungserkennung von Objekten, wie lebenden Autopodien 102 und Dokumenten 118. Im Vergleich zur prinzipiellen Anordnung in Fig. 1b enthalten diese Schichtkörper 100 mindestens eine zusätzliche sekundäre Leuchteinheit 707. Diese Anordnung ermöglicht neben der Beleuchtung des Objektes mit Anteilen der primären Leuchtschicht 700, die sich im Allgemeinen im sichtbaren Wellenlängenbereich befinden, eine Beleuchtung in anderen Wellenlängenbereichen wie beispielsweise IR oder UV. Diese Beleuchtung kann alternativ zur primären Beleuchtung oder zusätzlich eingeschaltet werden.

Dokumente haben beispielsweise Sicherheitsfeatures, die eine Beleuchtung im UV und im IR benötigen, um sie zu verifizieren. Lebende Autopodien 102 wiederum besitzen grundlegend unterschiedliche Lichtleit- und Streucharakteristika in verschiedenen Wellenlängenbereichen (beispielsweise in UV, blau, rot, IR). In beiden Fällen können mit der Aufnahme von Vergleichbildern bei Beleuchtung mit speziellen Wellenlängenbereichen Fälschungen einfach erkannt werden. Alle Schichten des Schichtkörpers 100, die sich zwischen der zusätzlichen sekundären Leuchteinheit 707 und der Auflagefläche 103 befinden, müssen für das Wellenlängenspektrum dieser sekundären Leuchteinheit 707 im Wesentlichen transparent sein. Befindet sich die primäre Leuchtschicht 700 zwischen der sekundären Leuchteinheit 707 und ist die primäre Leuchtschicht 700 mit einer lokal schaltenden Schicht 703 ausgestattet, dann ist auch eine strukturierte Beleuchtung durch die zusätzliche sekundäre Leuchteinheit 707 möglich. Dadurch werden die Möglichkeiten der Fälschungserkennung weiter verbessert. Beispielsweise kann so bei ein Autopodium 102 gezielt punktuell beleuchtet werden und über den Sensor die Lichtausbreitung im Autopodium 102 aufgenommen werden. Bei Dokumenten 118 können spezielle Sicherheitsmerkmale zur Verifikation einzeln punktell beleuchtet werden.

Fig. 11a zeigt einen Schichtkörper 100, der eine zusätzliche sekundäre Leuchteinheit 707 zur Fälschungserkennung enthält, die in Form von Photoluminiszenzfolie 702 ausgebildet ist.

Fig. 11b zeigt einen Schichtkörper 100, bei dem eine zusätzliche sekundäre Leuchteinheit 707 in Form einer Lichtleitschicht 706 ausgebildet ist.

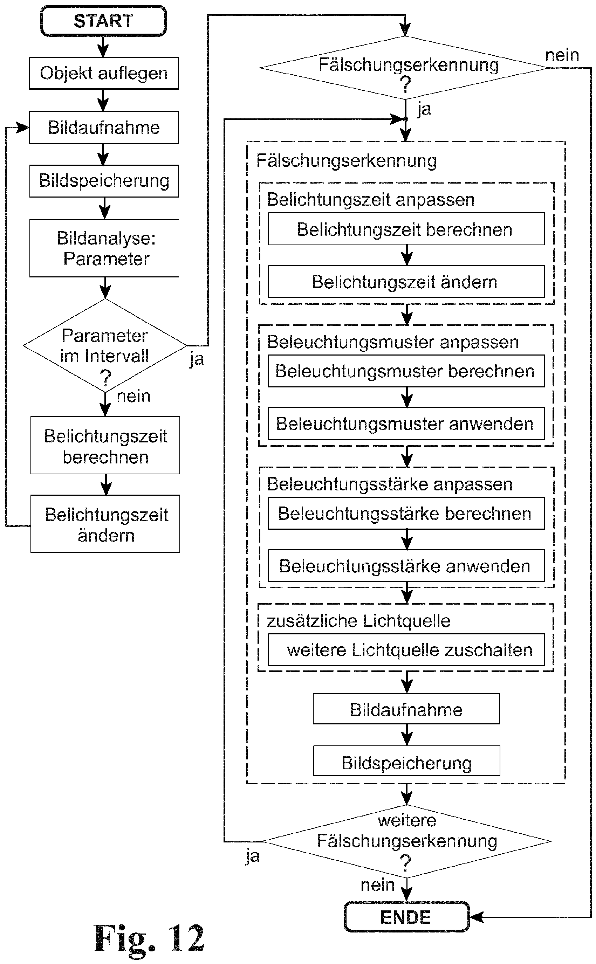

Fig. 12 zeigt als besonders bevorzugtes Ausführungsbesipiel ein Verfahren prinzipiell wie in Fig. 5, aber hier mit zusätzlicher Fäschungserkennung von Objekten, wie lebenden Autopdien 102 oder Dokumenten 118. Zur Fälschungserkennung sind verschiedene Anpassungen möglich, die jeweils optional und zueinander in beliebiger Reigenfolge stattfinden können: Belichtungszeit anpassen, Belichtungsmuster anpassen, Beleuchtungsstärke anpassen, zusätzliche Lichtquelle(n) ein- und ausschalten.

Nachdem alle Anpassungen vorgenommen wurden, findet die Bildaufnahme und - speicherung statt. Das gespeicherte Bild ist ein, bezogen auf das prinzipielle Verfahren, beschrieben in Fig. 5, zusätzliches Bild und ersetzt im Speicher das zuerst aufgenommene nicht. Die Aufnahme mehrerer Bilder mit unterschiedlichen Anpassungen ist möglich, beispielsweise ein Bild mit eingeschalteter UV-Beleuchtung und ein weiteres separat zu speicherndes Bild mit eingeschalteter IR-Beleuchtung.

### Mobile Anwendung der Erfindung

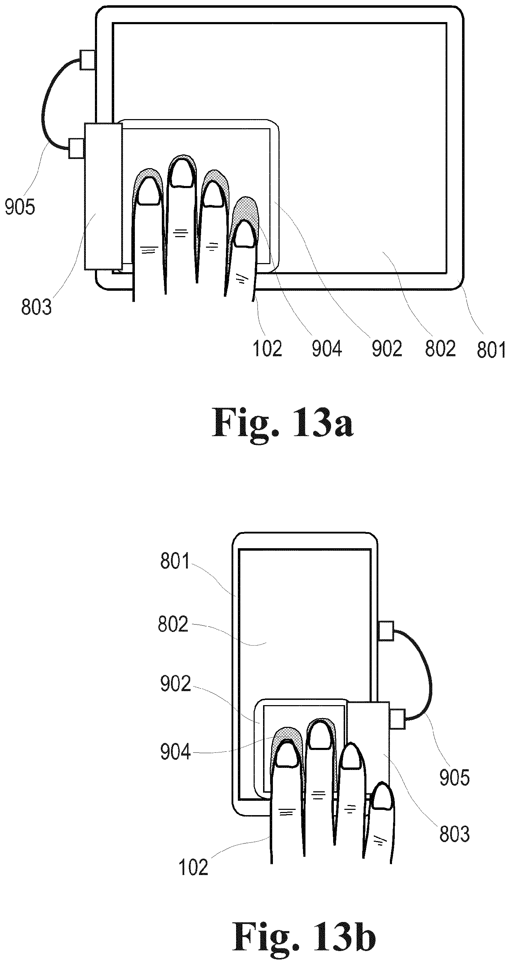

Fig. 13a-d zeigen ein besonders bevorzugtes Ausführungsbeipiel der erfindungsgemäßen Vorrichtung zu deren Verwendung im mobilen Anwendungsbereich.

Der erfindungsgemäße Schichtkörper 100 ist in diesem Fall leicht modifiziert, indem die primäre Leuchtschicht 700 am Schichtkörper 100 zunächst nicht vorhanden ist, weil die primäre Leuchtschicht 700 durch das zumeist sehr lichtstarke Display 802eines mobilen Gerätes, wie beispielsweise Tabletcomputer oder Smartphone, ersetzt werden kann. Dazu wird der reduzierte Schichtkörper 100 mit dem mobilen Gerät verbunden, indem der Schichtkörper 100 mit seiner unten befindlilchen transparenten Trägerschicht 701 auf das Display 802 des mobilen Gerätes gelegt und das mobile Gerät auch noch dazu verwendet wird, um Informationen direkt auf der Auflagefläche 103 des Schichtkörpers 100 darzustellen. Bei der Fingerabdruckaufnahme beispielsweise können Silhouetten 904 von Autopodien 102 dargestellt werden, um deren korrekte Positionierung intuitiv zu erleichtern, wie das in Fig. 13a und 13b dargestellt ist.

Das mobile Gerät liefert außerdem die notwendige Beleuchtung des Objektes, in diesen Beispiel eines Autopodiums. Das Display 802 des mobilen Gerätes fungiert somit als besondere Ausführungsform der primären Leuchtschicht 700. Des Weiteren wird die erfindungsgemäße Vorrichtung mit dem mobilen Gerät zum Datenaustausch verbunden. Diese Verbindung kann über eine übliche kabelgebundene Computerschnittstelle, wie beispielsweise USB, oder aber auch drahtlos, wie beispielsweise mittels Wlan oder Bluetooth, erfolgen.

Fig. 13a zeigt die erfindungsgemäße Vorrichtung verbunden mit einem Tabletcomputer. Die erfindungsgemäße Vorrichtung befindet sich dabei direkt auf dem Display 802 des Tabletcomputers.

Fig. 13b zeigt die erfindungsgemäße Vorrichtung verbunden mit einem Smartphone. Die erfindungsgemäße Vorrichtung befindet sich dabei direkt auf dem Display 802 des Smartphones.

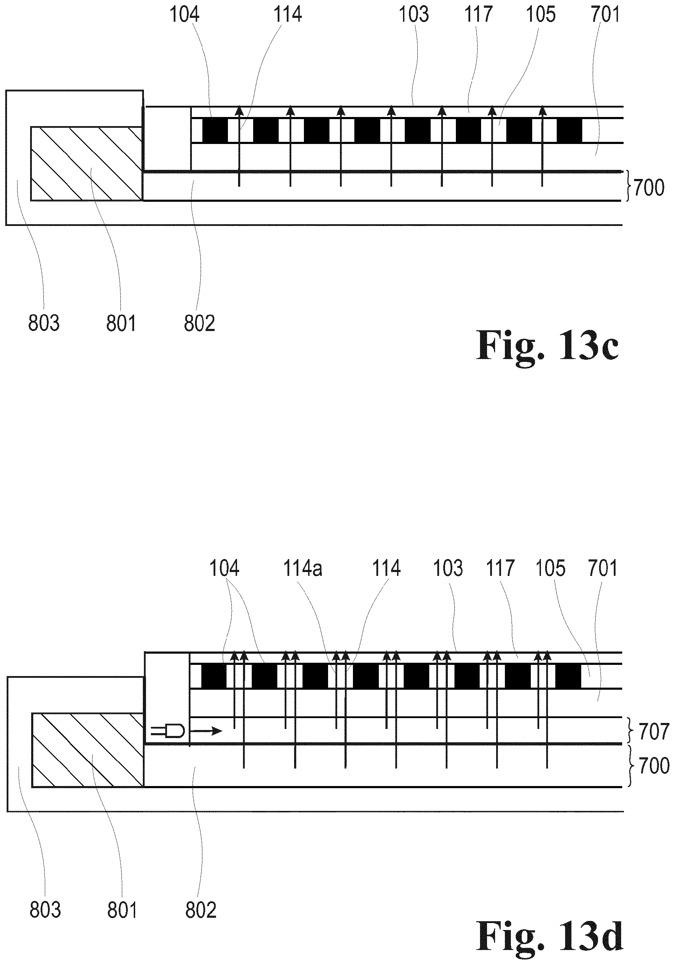

Fig. 13c zeigt den Querschnitt des Gesamtsystems, bestehend aus der erfindungsgemäßen Vorrichtung und dem mobilen Gerät. Die mechanische Verbindung erfolgt hier über eine Befestigungsanordnung 803.

Fig. 13d zeigt den Querschnitt des Gesamtsystems, bestehend aus der erfindungsgemäßen Vorrichtung und dem mobilen Gerät. Im Vergleich zu Fig. 13c befindet sich im Schichtaufbau eine zusätzliche sekundäre Leuchteinheit 707 zur Fälschungserkennung, diese ist transparent für die Beleuchtung des Displays 802 des Mobilgerätes, so dass dieses im Wesentlichen ungehindert Informationen auf der Auflagefläche 103 darstellen kann und das aufzunehmende Objekt beleuchten kann. Die mechanische Verbindung erfolgt hier wie in Fig. 13c über eine Befestigungsanordnung 803.

### Bezugszeichenliste

- 100: Schichtkörper
- 101: Umgebungslicht
- 102: Autopodium
- 103: Auflagefläche
- 104: lichtempfindliche Elemente
- 105: Sensorschicht (mit lichtempfindlichen Elementen)
- 105a: Sender-Empfänger-Schicht (mit lichtempfindlichen und lichtaussendenden Elementen)
- 106: Anteile des Umgebungslichtes 101 (mit Wellenlängen kleiner als 600 nm)
- 107: gestreutes Licht der Beleuchtung
- 107a: über einen Hautberg eingekoppeltes Streulicht
- 107b: über ein Hauttal eingekoppeltes Streulicht
- 108: Anteile des Umgebungslichtes 101 (mit Wellenlängen größer als 600 nm)
- 110: gestreutes Umgebungslicht 101 (mit Wellenlängen größer als 600 nm)
- 112: Anteil des Umgebungslichtes 101, der detektiert wird
- 113: Anteil des Beleuchtungslichts, der detektiert wird
- 113a: im Hautberg gestreuter detektierter Beleuchtungsanteil
- 113b: im Hauttal gestreuter und nicht detektierter Beleuchtungsanteil
- 113c: im Hauttal gestreuter und detektierter Beleuchtungsanteil
- 114: Beleuchtungslicht der primären Leuchtschicht 700
- 114a: Lichtanteil, der die Hautberge beleuchtet
- 114b: Lichtanteil, der die Hauttäler beleuchtet
- 114c: Beleuchtungslicht der sekundären Leuchteinheit
- 115: gestreutes Umgebungslicht 101 (mit Wellenlängen kleiner als 600 nm)
- 116: (vom Objekt kontaktierter) Bereich (der Auflagefläche 103)
- 117: Schutzschicht
- 118: Dokument
- 501: CTF für 20 µm Abstand
- 502: CTF für 40 µm Abstand
- 503: CTF für 60 µm Abstand
- 504: FBI-Anforderungen
- 700: primäre Leuchtschicht
- 701: transparente Trägerschicht
- 702: Photolumineszenzfolie
- 703: lokal schaltbare Schicht
- 704: Kaltkathodenröhre
- 705: LED oder OLED-Anordnung
- 706: Lichtleitschicht
- 802: Display eines Mobilgerätes
- 803: Befestigungsanordnung
- 902: Rahmen
- 904: Silhouette der Autopodien 102
- 905: Verbindungskabel
- 906: Darstellungsfläche

## Patentansprüche

1. Vorrichtung zur optischen Direktaufnahme von sicherheitsrelevanten Objekten ohne optisch abbildende Elemente, enthaltend eine Auflagefläche für die Objekte, unter der eine Sensorschicht (105), die lichtempfindliche Elemente (104) in einem zweidimensionalen regelmäßigen Pixelraster aufweist, angeordnet ist,
**dadurch gekennzeichnet, dass**
- die Sensorschicht (105) in einem Schichtkörper (100) mit einer Elektronik auf Basis der Dünnschicht-Transistor-(TFT-)Technologie ausgeführt ist,
- die Sensorschicht (105) sich auf einer mindestens im sichtbaren Wellenlängenbereich transparenten Trägerschicht (701) befindet,
- die lichtempfindlichen Elemente (104) der Sensorschicht (105) einen Abstand zu dem aufzunehmenden Objekt (102, 118) auf der Auflagefläche (103) von weniger als dem durch das Pixelraster definierten Pixelmittenabstand aufweisen,
- eine weitere Elektronik zur Bildspeicherung und Bildanalyse vorhanden ist, die eine Bewertung von mindestens einem Parameter, der Aussagen über die Qualität der Bildaufnahme liefert und der sich bei Anpassung der Belichtungszeit ändern, aufweist,
- die lichtempfindlichen Elemente (104) der Sensorschicht (105) innerhalb der Elektronik auf Basis der TFT-Technologie über jeweils eine elektronische Steuereinheit zur Steuerung der Belichtungszeit verfügen, um die lichtempfindlichen Elemente (104) mit an die vorliegende Bildaufnahme mittels der weiteren Elektronik zur Bildspeicherung und Bildanalyse angepasster unterschiedlicher Belichtungszeit erneut auszulesen, um den bewerteten Parameter zu verbessern,
- als sicherheitsrelevante Objekte mindestens ein Objekt aus der Gruppe Personaldokumente, Reisepässe, Führerscheine oder aus der Gruppe Finger-, Hand- oder andere Hautabdrücke einzeln auf die Auflagefläche (103) auflegbar sind, um Bilder eines nach Bedarf aus beiden Gruppen ausgewählten Objekts aufzunehmen, und
- eine Lichtquelle als primäre Leuchtschicht (700) so ausgebildet ist, dass mindestens Lichtanteile (114) von der primären Leuchtschicht (700) aus Richtung der Sensorschicht (105) durch die Auflagefläche (103) hindurch das aufzunehmende Objekt (102, 118) beleuchten können, wobei alle Schichten des Schichtkörpers (100), die sich zwischen primärer Leuchtschicht (700) und Auflagefläche (103) befinden, mindestens Lichtanteile im sichtbaren Wellenlängenbereich transmittieren.

2. Vorrichtung nach Anspruch 1, **dadurch gekennzeichnet, dass** die Steuereinheit zur Steuerung der Belichtungszeit als Rolling-Shutter ausgebildet ist.

3. Vorrichtung nach Anspruch 1, **dadurch gekennzeichnet, dass** die Steuereinheit zur Steuerung der Belichtungszeit als Global-Shutter ausgebildet ist.

4. Vorrichtung nach Anspruch 1, **dadurch gekennzeichnet, dass** die Steuereinheit zur Steuerung der Belichtungszeit so ausgebildet ist, dass die Belichtungszeit von verschiedenen Pixeln oder Pixelgruppen (beispielsweise Zeilen oder Spalten) für dieselbe Aufnahme unterschiedlich einstellbar ist.

5. Vorrichtung nach Anspruch 1, **dadurch gekennzeichnet, dass** als primäre Leuchtschicht (700) eine Kaltkathodenröhre (704) oder Photolumineszenzfolie (702) unter der Sensorschicht (105) angeordnet ist.

6. Vorrichtung nach Anspruch 1, **dadurch gekennzeichnet, dass** die primäre Leuchtschicht (700) eine Anordnung von zweidimensional regelmäßig angeordneten singulären Leuchtdioden aus der Gruppe LED, OLED, QLED enthält, die unterhalb der Sensorschicht (105) angeordnet ist.

7. Vorrichtung nach Anspruch 1, **dadurch gekennzeichnet, dass** die primäre Leuchtschicht (700) eine Anordnung mit zweidimensional regelmäßig angeordneten singulären Leuchtdioden aus der Gruppe LED, OLED, QLED enthält, die innerhalb der Sensorschicht (105) angeordnet sind.

8. Vorrichtung nach Anspruch 1, **dadurch gekennzeichnet, dass** die primäre Leuchtschicht (700) ein erstes Wellenlängenspektrum aufweist und mindestens eine sekundäre Leuchteinheit (707) mit mindestens einem zweiten, mit dem ersten Wellenlängenspektrum nicht identischen Wellenlängenspektrum alternativ zur primären Leuchtschicht (700) einschaltbar ist, um mindestens ein Vergleichsbild für eine Fälschungserkennung bei Finger- oder Handabdruckaufnahmen oder eine Verifizierung von Sicherheitsmerkmalen bei Dokumentenaufnahmen bei jeweils unterschiedlichen Vergleichswellenlängen aufzunehmen.

9. Vorrichtung gemäß Anspruch 1, **dadurch gekennzeichnet, dass** als primäre Lichtquelle die primäre Leuchtschicht (700) durch ein lichtabstrahlendes Display (802) eines mobilen Kommunikationsgerätes aus der Gruppe Smartphone, Tablet-Computer, Laptop ersetzt ist.

10. Vorrichtung gemäß Anspruch 8 und 9, **dadurch gekennzeichnet, dass** zusätzlich zur primären Leuchtschicht (700) in Form des Displays (802) des mobilen Kommunikationsgerätes die sekundäre Leuchteinheit (707) zwischen primärer Leuchtschicht (700) und Auflagefläche (103) vorhanden ist, enthaltend
- mindestens eine Lichtquelle aus der Gruppe, LED, OLED, und
- mindestens eine Lichtleitschicht (706),
- wobei die sekundäre Leuchteinheit (707) für das Licht des Displays (802) des mobilen Kommunikationsgerätes weitgehend transparent ist.

11. Verfahren zur Erzeugung von optischen Direktaufnahmen von sicherheitsrelevanten Objekten mit verbessertem Kontrast und / oder verbesserter Dynamik unter Verwendung einer Vorrichtung nach Anspruch 1 mit einer Auflagefläche (103) für die Objekte, unter der sich eine Sensorschicht (105) mit in einem zweidimensionalen regelmäßigen Pixelraster angeordneten lichtempfindlichen Elementen (104) befindet, enthaltend folgende Schritte:
- Auflegen eines aus der Gruppe Personaldokumente, Reisepässe, oder Führerscheine oder aus der Gruppe Einzelfinger, Mehrfinger, Handabdrücke oder andere Hautabdrücke nach Bedarf ausgewählten Objektes (102, 118) auf die Auflagefläche (103),
- Aufnahme eines Bildes vom aufgelegten Objekt (102, 118) mit einer vordefinierten Belichtungszeit und Speicherung des Bildes,
- Analyse des vom Objekt (102, 118) aufgenommenen Bildes mindestens hinsichtlich Über- oder Unterbelichtung,
- Ändern der Belichtungszeiten, wenn die Analyse eine Über- oder Unterbelichtung festgestellt hat, durch Änderung der Shuttereinstellungen der lichtempfindlichen Elemente (104) in der Sensorschicht (105),
- erneute Bildaufnahme, Bildspeicherung und Bildanalyse auf Über- oder Unterbelichtung, ob eine weitere Iteration zur Änderung der Belichtungszeiten notwendig ist, und
- Speichern der Bildaufnahme als Ergebnisbild, wenn die Bildanalyse keine weitere Änderung der Belichtungszeiten erforderlich macht.

12. Verfahren nach Anspruch 11, wobei in der Bildanalyse zusätzlich die Beleuchtungsstärke bewertet und beim Feststellen einer Unter- oder Überbelichtung eine Anpassung der Beleuchtungsstärke einer primären Leuchtschicht (700) unterhalb einer Auflagefläche (103) erfolgt.

13. Verfahren nach Anspruch 11, wobei in der Bildanalyse zusätzlich die Homogenität der Bildausleuchtung bewertet und bei Feststellung einer lokalen Über- oder Unterbelichtung mindestens in Teilen der Bildaufnahme des Objekts (102, 118) eine weitere Bildaufnahme in Abhängigkeit von festgestellten Inhomogenitäten bei lokal angepasster Beleuchtungsstärke mittels einer primären Leuchtschicht (700) vorgenommen wird, um die Inhomogenitäten zu reduzieren oder zu kompensieren.

14. Verfahren nach Anspruch 11, 12 oder 13, wobei das Verfahren mehrfach bei Beleuchtung des Objekts (102, 118) mit unterschiedlichen Beleuchtungswellenlängen durchgeführt wird, wobei mehrere Bilder jeweils mit unterschiedlichem Spektralbereich und opimierter Belichtungszeit einzeln gespeichert und in einem weiteren Schritt mittels Bildbearbeitungsalgorithmen die mehreren einzelnen Bilder zu einem mehrfarbigen Gesamtbild überlagert werden.

15. Verfahren nach Anspruch 11, wobei zusätzliche Bildaufnahmen im UV- und IR-Bereich für die Prüfung von Sicherheitsmerkmalen von Dokumenten aufgenommen und separat abgespeichert werden.

16. Verfahren nach Anspruch 11, wobei zusätzliche Bildaufnahmen bei Beleuchtung mit schmalbandigen sekundären Leuchteinheiten (707) in unterschiedlichen Spektralbereichen zur Fälschungsprüfung von Finger- oder Handabdrücken aufgenommen, als Vergleichsbilder gespeichert und untereinander oder mit Referenzaufnahmen verglichen werden.

17. Verfahren zur Erzeugung von optischen Direktaufnahmen von sicherheitsrelevanten Objekten mit verbessertem Kontrast und / oder verbesserter Dynamik unter Verwendung einer Vorrichtung nach Anspruch 1 mit einer Auflagefläche (103) für die Objekte, unter der sich eine Sensorschicht (105) mit in einem zweidimensionalen regelmäßigen Pixelraster angeordneten lichtempfindlichen Elementen (104) befindet, enthaltend folgende Schritte:
- Auflegen eines aus der Gruppe Personaldokumente, Reisepässe, oder Führerscheine oder aus der Gruppe Einzelfinger, Mehrfinger, Handabdrücke oder andere Hautabdrücke nach Bedarf ausgewählten Objektes (102, 118) auf die Auflagefläche (103),
- Aufnahme und Speicherung von mindestens zwei Bildern vom aufgelegten Objekt (102, 118), die aufeinanderfolgend mit unterschiedlichen, an die Objekte der beiden verschiedenen Gruppen angepassten Belichtungszeiten durch Änderung der Shuttereinstellungen der lichtempfindlichen Elemente (104) in der Sensorschicht (105) erzeugt werden, und
- Überlagerung der mindestens zwei gespeicherten Bilder mittels eines Softwarealgorithmus, der dazu ausgebildet ist, ein kontrastverbessertes Ergebnisbild oder ein Ergebnisbild mit erhöhtem Dynamikumfang zu erzeugen.

## Claims

1. A device for direct optical recording of security-relevant objects without imaging optical elements, containing a placement surface for the objects, under which a sensor layer (105) is arranged, which has light-sensitive elements (104) in a two-dimensional regular pixel grid,
**characterised in that**
- the sensor layer (105) is provided in a layered body (100) with electronics based on thin-film transistor (TFT) technology,
- the sensor layer (105) is located on a carrier layer (701) that is transparent at least in the visible wavelength range,
- the light-sensitive elements (104) of the sensor layer (105) have a distance to the object (102, 118) to be recorded on the placement surface (103) of less than the pixel centre-to-centre distance defined by the pixel grid,
- further electronics for image storage and image analysis are present, which have an evaluation of at least one parameter that provides information about the quality of the image recording and which changes when the exposure time is adjusted,
- the light-sensitive elements (104) of the sensor layer (105) within the electronics based on TFT technology each have an electronic control unit for controlling the exposure time in order to read out the light-sensitive elements (104) again with a different exposure time adapted to the present image recording by means of the further electronics for image storage and image analysis in order to improve the evaluated parameter,
- as security-relevant objects, at least one object from the group of personal identification documents, passports, driving licences or from the group of fingerprints, palm prints or other skin prints can be placed individually on the placement surface (103) in order to record images of an object selected as required from both groups, and
- a light source is provided as a primary light-emitting layer (700) such that at least light components (114) from the primary light-emitting layer (700) can illuminate the object (102, 118) to be recorded from the direction of the sensor layer (105) through the placement surface (103), wherein all layers of the layered body (100) which are located between the primary light-emitting layer (700) and the placement surface (103) transmit at least light components in the visible wavelength range.

2. The device according to claim 1, **characterised in that**
the control unit for controlling the exposure time is provided as a rolling shutter.

3. The device according to claim 1, **characterised in that**
the control unit for controlling the exposure time is provided as a global shutter.

4. The device according to claim 1, **characterised in that**
the control unit for controlling the exposure time is configured in such a way that the exposure time of different pixels or pixel groups (e.g. rows or columns) can be set differently for the same image.

5. The device according to claim 1, **characterised in that**
a cold-cathode tube (704) or photoluminescent film (702) is arranged under the sensor layer (105) as the primary light-emitting layer (700).

6. The device according to claim 1, **characterised in that**
the primary light-emitting layer (700) contains an arrangement of two-dimensionally regularly arranged singular light-emitting diodes from the group LED, OLED, QLED, which is arranged below the sensor layer (105).

7. The device according to claim 1, **characterised in that**
the primary light-emitting layer (700) contains an arrangement of two-dimensionally regularly arranged singular light-emitting diodes from the group LED, OLED, QLED, which are arranged within the sensor layer (105).

8. The device according to claim 1, **characterised in that**
the primary light-emitting layer (700) has a first wavelength spectrum and at least one secondary light-emitting unit (707) with at least one second wavelength spectrum, which is not identical to the first wavelength spectrum, can be switched on as an alternative to the primary light-emitting layer (700) in order to record at least one comparison image for forgery detection in fingerprint or palm print images or verification of security features in document images at different comparison wavelengths in each case.

9. The device according to claim 1, **characterised in that** the primary light-emitting layer (700) is replaced as the primary light source by a light-emitting display (802) of a mobile communication device from the group of smartphones, tablet computers, laptops.

10. The device according to claims 8 and 9, **characterised in that** in addition to the primary light-emitting layer (700) in the form of the display (802) of the mobile communication device, the secondary light-emitting unit (707) is present between the primary light-emitting layer (700) and the placement surface (103), comprising
- at least one light source from the group of LED, OLED and
- at least one light-guiding layer (706),
- wherein the secondary light-emitting unit (707) is substantially transparent to the light of the display (802) of the mobile communication device.

11. A method for generating direct optical images of security-relevant objects with improved contrast and/or improved dynamics using a device according to claim 1 with a placement surface (103) for the objects, under which a sensor layer (105) with light-sensitive elements (104) arranged in a two-dimensional regular pixel grid is located, comprising the following steps:
- placing an object (102, 118) selected from the group of personal identification documents, passports or driving licences or from the group of single fingerprint, multiple fingerprints, palm prints or other skin impressions on the placement surface (103) as required,
- recording an image of the object (102, 118) in place with a predefined exposure time and storing the image,
- analysing the image taken of the object (102, 118) at least with regard to overexposure or underexposure,
- changing the exposure times when the analysis has detected overexposure or underexposure by changing the shutter settings of the light-sensitive elements (104) in the sensor layer (105), and
- repeating the image recording, image storage and image analysis for overexposure or underexposure as to whether a further iteration is necessary to change the exposure times, and
- storing the recorded image as a result image if the image analysis does not require any further changes to the exposure times.

12. The method according to claim 11, wherein the illuminance is additionally evaluated in the image analysis and the illuminance of a primary light-emitting layer (700) below a placement surface (103) is adjusted when underexposure or overexposure is detected.

13. The method according to claim 11, wherein the homogeneity of the image illumination is additionally evaluated in the image analysis and, if local overexposure or underexposure is detected at least in parts of the image recording of the object (102, 118), a further image recording is carried out as a function of detected inhomogeneities with locally adapted illuminance by means of a primary light-emitting layer (700) in order to reduce or compensate for the inhomogeneities.

14. The method according to claim 11, 12 or 13, wherein the method is carried out several times while illuminating the object (102, 118) with different illumination wavelengths, wherein several images each with a different spectral range and optimised exposure time are stored individually and in a further step the several individual images are superimposed by means of image processing algorithms to form a multicoloured overall image.

15. The method according to claim 11, wherein additional images are recorded in the UV and IR range for the inspection of security features of documents and stored separately.

16. The method according to claim 11, wherein additional image recordings are taken when illuminated with narrow-band secondary light units (707) in different spectral ranges for forgery checking of fingerprints or palm prints, stored as comparison images and compared with one another or with reference recordings.

17. A method for generating direct optical images of security-relevant objects with improved contrast and/or improved dynamics using a device according to claim 1 with a placement surface (103) for the objects, under which a sensor layer (105) with light-sensitive elements (104) arranged in a two-dimensional regular pixel grid is located, comprising the following steps:
- placing an object (102, 118) selected from the group of personal identification documents, passports or driving licences or from the group of single fingerprint, multiple fingerprints, palm prints or other skin impressions on the placement surface (103) as required,
- recording and storing at least two images of the object (102, 118) in place, which are produced successively with different exposure times adapted to the objects of the two different groups by changing the shutter settings of the light-sensitive elements (104) in the sensor layer (105), and
- superimposing the at least two stored images by means of a software algorithm which is designed to generate a contrast-enhanced result image or a result image with increased dynamic range.

## Revendications

1. Dispositif d'enregistrement optique direct d'objets importants pour la sécurité sans éléments optiques de représentation, contenant une surface d'appui pour les objets, sous laquelle est disposée une couche de détection (105) qui présente des éléments photosensibles (104) dans une grille de pixels régulière bidimensionnelle,
**caractérisé en ce que**
- la couche de détection (105) est réalisée dans un corps stratifié (100) avec un système électronique basé sur la technologie des transistors en couches minces (TFT),
- la couche de détection (105) se trouve sur une couche de support (701) transparente au moins dans la gamme des longueurs d'onde visibles,
- les éléments photosensibles (104) de la couche de détection (105) présentent une distance par rapport à l'objet à enregistrer (102, 118) sur la surface d'appui (103) inférieure à l'écartement des centres de pixels défini par la grille de pixels,
- il existe un autre système électronique pour l'enregistrement et l'analyse d'images, qui présente une évaluation d'au moins un paramètre qui fournit des informations sur la qualité de l'image enregistrée et qui se modifie lors de l'adaptation du temps d'exposition,
- les éléments photosensibles (104) de la couche de détection (105) disposent, à l'intérieur du système électronique basé sur la technologie TFT, respectivement d'une unité de commande électronique pour la commande du temps d'exposition, afin de lire à nouveau les éléments photosensibles (104) avec un temps d'exposition différent adapté au présent enregistrement d'image au moyen de l'autre système électronique pour le stockage et l'analyse d'images, afin d'améliorer le paramètre évalué,
- en tant qu'objets importants pour la sécurité, au moins un objet du groupe des documents personnels, des passeports, des permis de conduire ou du groupe des empreintes digitales, des empreintes de la main ou d'autres empreintes de la peau peuvent être placés individuellement sur la surface d'appui (103) afin d'enregistrer des images d'un objet sélectionné à la demande parmi les deux groupes, et
- une source de lumière est conçue comme couche lumineuse primaire (700) de telle sorte qu'au moins des parties de lumière (114) provenant de la couche lumineuse primaire (700) peuvent éclairer l'objet à enregistrer (102, 118) à partir de la direction de la couche de détection (105) à travers la surface d'appui (103), toutes les couches du corps stratifié (100) qui se trouvent entre la couche lumineuse primaire (700) et la surface d'appui (103) transmettant au moins des parties de lumière dans la plage de longueurs d'onde visible.

2. Dispositif selon la revendication 1, **caractérisé en ce que** l'unité de commande pour la commande du temps d'exposition est conçue comme un obturateur roulant.

3. Dispositif selon la revendication 1, **caractérisé en ce que** l'unité de commande pour la commande du temps d'exposition est conçue comme un obturateur global.

4. Dispositif selon la revendication 1, **caractérisé en ce que** l'unité de commande pour la commande du temps d'exposition est conçue de telle sorte que le temps d'exposition de différents pixels ou groupes de pixels (par exemple lignes ou colonnes) peut être réglé différemment pour la même image enregistrée.

5. Dispositif selon la revendication 1, **caractérisé en ce que** l'on dispose un tube à cathode froide (704) ou un film photoluminescent (702) en tant que couche luminescente primaire (700) sous la couche de détection (105).

6. Dispositif selon la revendication 1, **caractérisé en ce que** la couche luminescente primaire (700) contient un réseau de diodes luminescentes singulières disposées régulièrement de manière bidimensionnelle du groupe LED, OLED, QLED, qui est disposé au-dessous de la couche de détection (105).

7. Dispositif selon la revendication 1, **caractérisé en ce que** la couche luminescente primaire (700) comprend un réseau de diodes luminescentes singulières disposées régulièrement de manière bidimensionnelle du groupe LED, OLED, QLED, qui sont disposées à l'intérieur de la couche de détection (105).

8. Dispositif selon la revendication 1, **caractérisé en ce que**
la couche lumineuse primaire (700) présente un premier spectre de longueurs d'onde et au moins une unité lumineuse secondaire (707) avec au moins un deuxième spectre de longueurs d'onde non identique au premier spectre de longueurs d'onde peut être activée en alternative à la couche lumineuse primaire (700) pour enregistrer au moins une image de comparaison pour une détection de falsification lors de prises de vue d'empreintes digitales ou palmaires ou une vérification de caractéristiques de sécurité lors de prises de vue de documents pour des longueurs d'onde de comparaison respectivement différentes.

9. Dispositif selon la revendication 1, **caractérisé en ce que**, en tant que source lumineuse primaire, la couche lumineuse primaire (700) est remplacée par un écran (802) émettant de la lumière d'un appareil de communication mobile choisi dans le groupe constitué par un smartphone, une tablette et un ordinateur portable.

10. Dispositif selon les revendications 8 et 9, **caractérisé en ce que** en plus de la couche lumineuse primaire (700) sous la forme de l'écran (802) de l'appareil de communication mobile, l'unité lumineuse secondaire (707) est présente entre la couche lumineuse primaire (700) et la surface d'appui (103), contenant
- au moins une source lumineuse du groupe, LED, OLED et
- au moins une couche de guidage de lumière (706),
- l'unité d'éclairage secondaire (707) étant sensiblement transparente à la lumière de l'écran (802) du dispositif de communication mobile.

11. Procédé de production de prises de vue optiques directes d'objets importants pour la sécurité avec un contraste amélioré et/ou une dynamique améliorée en utilisant un dispositif selon la revendication 1 avec une surface d'appui (103) pour les objets, sous laquelle se trouve une couche de détection (105) avec des éléments photosensibles (104) disposés dans une grille de pixels régulière bidimensionnelle, comprenant les étapes suivantes :
- mise en place sur la surface d'appui (103) d'un objet (102, 118) choisi dans le groupe des documents d'identité, passeports ou permis de conduire ou choisi dans le groupe des empreintes de doigts uniques, de doigts multiples, de main ou d'autres empreintes cutanées, selon les besoins,
- enregistrement d'une image de l'objet mis en place (102, 118) avec un temps d'exposition prédéfini et stockage de l'image,
- analyse de l'image enregistrée de l'objet (102, 118) au moins en ce qui concerne la surexposition ou la sous-exposition,
- modification des temps d'exposition lorsque l'analyse a détecté une surexposition ou une sous-exposition, en modifiant les réglages d'obturateur des éléments photosensibles (104) dans la couche de détection (105), et
- nouveau enregistrement d'image, nouveau stockage de l'image et nouvelle analyse de l'image pour déterminer si elle est surexposée ou sous-exposée et si une autre itération est nécessaire pour modifier les temps d'exposition, et
- stockage de l'image enregistrée en tant qu'image résultante si l'analyse de l'image ne nécessite pas de modification supplémentaire des temps d'exposition.

12. Procédé selon la revendication 11, dans lequel l'intensité lumineuse est en outre évaluée dans l'analyse d'image et, en cas de constatation d'une sous-exposition ou d'une surexposition, une adaptation de l'intensité lumineuse d'une couche lumineuse primaire (700) sous une surface d'appui (103) est effectuée.

13. Procédé selon la revendication 11, dans lequel, dans l'analyse d'image, on évalue en outre l'homogénéité de l'éclairage de l'image et, si l'on constate une surexposition ou une sous-exposition locale au moins dans des parties de l'image enregistrée de l'objet (102, 118), on procède à un autre enregistrement d'image en fonction des inhomogénéités constatées avec une intensité d'éclairage adaptée localement au moyen d'une couche lumineuse primaire (700), afin de réduire ou de compenser les inhomogénéités.

14. Procédé selon la revendication 11, 12 ou 13, dans lequel le procédé est mis en oeuvre plusieurs fois en éclairant l'objet (102, 118) avec différentes longueurs d'onde d'éclairage, dans lequel plusieurs images sont enregistrées individuellement, chacune avec une plage spectrale différente et un temps d'exposition optimisé, et dans une étape ultérieure, les plusieurs images individuelles sont superposées en une image globale multicolore au moyen d'algorithmes de traitement d'image.

15. Procédé selon la revendication 11, dans lequel des images supplémentaires dans les domaines UV et IR sont enregistrées pour l'examen de caractéristiques de sécurité de documents et sont stockées séparément.

16. Procédé selon la revendication 11, dans lequel des images supplémentaires sont enregistrées lors de l'éclairage avec des unités d'éclairage secondaires à bande étroite (707) dans différentes plages spectrales pour le contrôle de falsification d'empreintes digitales ou palmaires, sont stockées en tant qu'images comparatives et sont comparées entre elles ou avec des images de référence.

17. Procédé de production de prises de vue optiques directes d'objets importants pour la sécurité avec un contraste amélioré et/ou une dynamique améliorée en utilisant un dispositif selon la revendication 1 avec une surface d'appui (103) pour les objets, sous laquelle se trouve une couche de détection (105) avec des éléments photosensibles (104) disposés dans une grille de pixels régulière bidimensionnelle, comprenant les étapes suivantes :
- mise en place sur la surface d'appui (103) d'un objet (102, 118) choisi dans le groupe des documents d'identité, passeports ou permis de conduire ou choisi dans le groupe des empreintes de doigts uniques, de doigts multiples, de main ou d'autres empreintes cutanées, selon les besoins,
- enregistrement et stockage d'au moins deux images de l'objet mise en place (102, 118), qui sont produites successivement avec des temps d'exposition différents, adaptés aux objets des deux groupes différents, en modifiant les réglages d'obturateur des éléments photosensibles (104) dans la couche de détection (105), et
- superposition des au moins deux images stockées au moyen d'un algorithme logiciel qui est conçu pour produire une image résultante à contraste amélioré ou une image résultante à gamme dynamique accrue.
